(19) Europäisches Patentamt
European Patent Office
Office européen des brevets

(11) EP 3 239 111 B1

(12) **EUROPEAN PATENT SPECIFICATION**

(45) Date of publication and mention of the grant of the patent:
**17.02.2021 Bulletin 2021/07**

(21) Application number: **15872560.6**

(22) Date of filing: **18.11.2015**

(51) Int Cl.:
*C03C 17/42* (2006.01) *B32B 17/10* (2006.01)
*G02F 1/1333* (2006.01) *G06F 3/041* (2006.01)
*G06F 3/044* (2006.01)

(86) International application number:
**PCT/JP2015/082337**

(87) International publication number:
**WO 2016/103991 (30.06.2016 Gazette 2016/26)**

(54) **CURABLE COMPOSITION, TRANSFER FILM, FRONT PLATE OF IMAGE DISPLAY DEVICE, FRONT PLATE-INTEGRATED SENSOR, IMAGE DISPLAY DEVICE, AND MANUFACTURING METHOD FOR FRONT PLATE OF IMAGE DISPLAY DEVICE**

HÄRTBARE ZUSAMMENSETZUNG, TRANSFERFOLIE, FRONTPLATTE EINER BILDANZEIGEVORRICHTUNG, FRONTPLATTENINTEGRIERTER SENSOR, BILDANZEIGEVORRICHTUNG UND VERFAHREN ZUR HERSTELLUNG EINER FRONTPLATTE EINER BILDANZEIGEVORRICHTUNG

COMPOSITION DURCISSABLE, FILM DE TRANSFERT, PLAQUE AVANT D'UN DISPOSITIF D'AFFICHAGE D'IMAGE, CAPTEUR INTÉGRÉ À UNE PLAQUE AVANT, DISPOSITIF D'AFFICHAGE D'IMAGE, ET PROCÉDÉ DE FABRICATION POUR PLAQUE AVANT DE DISPOSITIF D'AFFICHAGE D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2014 JP 2014264786**

(43) Date of publication of application:
**01.11.2017 Bulletin 2017/44**

(73) Proprietor: **FUJIFILM Corporation**
**Tokyo 106-8620 (JP)**

(72) Inventors:
- **MOROZUMI, Kazumasa**
**Fujinomiya-shi**
**Shizuoka 418-8666 (JP)**
- **OSADA, Shuichiro**
**Fujinomiya-shi**
**Shizuoka 418-8666 (JP)**
- **TAKEUCHI, Ko**
**Fujinomiya-shi**
**Shizuoka 418-8666 (JP)**

(74) Representative: **Dehns**
**St. Bride's House**
**10 Salisbury Square**
**London EC4Y 8JD (GB)**

(56) References cited:
**WO-A1-2008/079275** **WO-A1-2014/030599**
**WO-A1-2014/030599** **JP-A- H10 206 905**
**JP-A- 2012 212 820** **JP-A- 2014 228 615**
**JP-A- 2015 147 687** **JP-A- 2015 199 641**
**US-A1- 2011 177 342**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 239 111 B1

## Description

BACKGROUND OF THE INVENTION

1. Field of the Invention

The present invention relates to curable image display device front panels, front panel and sensor assemblies, image display devices, and methods for manufacturing image display device front panels. Specifically, the invention relates to a curable composition, for forming a cured layer between a strengthened glass and a transparent conductive layer formed on one side of the glass, that can reduce a decrease in the surface strength of the strengthened glass due to the formation of the transparent conductive layer and that has high light transmittance; a transfer film using such a curable composition; an image display device front panel using such a curable composition; a front panel and sensor assembly using such an image display device front panel; an image display device including such a front panel and sensor assembly; and a method for manufacturing an image display device front panel using such a curable composition.

2. Description of the Related Art

Recently, there have been various types of electronic equipment, such as cellular phones, car navigation systems, personal computers, ticket machines, and banking terminals, in which a tablet-type input device is disposed on a surface of an image display device such as a liquid crystal display device. A user views an instruction image displayed in the image display region of the image display device and touches the position where the instruction image is displayed, for example, with a finger or touch pen, thereby inputting information associated with the instruction image.

Examples of such input devices (touch panels) include resistive-film input devices and capacitive input devices. Capacitive input devices have the advantage that an optically transparent conductive layer only needs to be formed on one substrate. There are known capacitive input devices including a front panel and sensor assembly (cover glass and sensor assembly, also known as One Glass Solution (OGS)) in which a front panel is integrated with a capacitive input device.

It is known to use a strengthened glass, such as Gorilla Glass from Corning Incorporated, as a front panel for an image display device, such as a smartphone or tablet-type computer, that includes a capacitive touch panel on a liquid crystal or organic EL display (see, for example, PTLs 1 and 2).

PTL 1 discloses a cover glass and sensor assembly including:

a glass substrate;
first and second transparent conductive layers formed on one side of the glass substrate, the first transparent conductive layer extending in a first direction, the second transparent conductive layer extending in a direction different from the first direction; and
an underlying insulating layer formed between the first and second transparent conductive layers and the glass substrate and made of a transparent organic compound.

PTL 1 discloses that this structure provides a cover glass and sensor assembly, for use in a capacitive touch panel, in which elements such as transparent conductive layers for position detection are formed on a cover glass and which can be used to provide a capacitive touch panel with high durability.

Specifically, focusing on the fact that the sensor surface of a strengthened glass substrate of a conventional cover glass and sensor assembly has low surface strength, PTL 1 discloses that the use of an underlying insulating layer significantly improves the strength of the glass substrate and thus provides a touch sensor with high durability for an image display device such as a smartphone or tablet-type computer.

PTL 2 discloses that, in a capacitive input device having a transparent front panel, a decorative layer disposed on a portion of one side of the front panel, and an electrode pattern disposed on one side of the front panel, a transparent resin layer containing at least a silicone resin as a binder resin and having a thickness of 5 $\mu$m or more is used to cover a step between the front panel and the decorative layer.

Citation List

WO2008/079275 1discloses composite articles comprising a substrate, a cation-sensitive layer and a silicone layer disposed between the substrate and the cation-sensitivelayer for preventing cations from migrating from the substrate to the cation-sensitive layer. As discussed in paragraph [0003] and [0005] of D1, the aim of D1 is to allow use of substrates such as conventional glass in OLEDs, rather than having to use high quality, expensive glass with low levels of cations. Wo2014/030599 discloses a sensor-integrated cover glass having a glass panel; a first transparent conductive

filmextending in a first direction, and a second transparent conductive film extending in a different direction from the first direction, the films being formed on one surface of the glass panel; and a base insulating film comprising a transparent organic compound, formed between the glass panel and the first transparent conductive film and the second transparent conductive film.

PTL 1: WO2014/030599
PTL 2: Japanese Unexamined Patent Application Publication No. 2014-160460

SUMMARY OF THE INVENTION

Recently, there has been a need to reduce the resistance of transparent conductive layers for improved touch panel sensitivity. To this end, for example, transparent conductive layers made of materials such as indium tin oxide (tin-doped indium oxide, hereinafter referred to as ITO) have to be annealed at elevated temperatures.

The inventors have investigated annealing at elevated temperatures to reduce the resistance of the transparent conductive layers of the image display device front panel disclosed in PTL 1. As a result, the inventors have found that, if a cured layer is formed as an underlying insulating layer on an image display device front panel using an acrylic polymerizable compound actually used in PTL 1 and the transparent conductive layers are annealed to reduce the resistance of the transparent conductive layers so that the touch panel sensitivity can be sufficiently improved, the underlying insulating layer is colored due to heat, and the light transmittance decreases to a level that is not acceptable for image display device applications.

An object of the present invention is to provide a curable composition, for forming a cured layer between a strengthened glass and a transparent conductive layer formed on one side of the glass, that can reduce a decrease in the surface strength of the strengthened glass due to the formation of the transparent conductive layer and that has high transmittance.

The inventors have found that it is possible to provide a curable composition that contains a compound having an organic group and a siloxane bond and that, when used to form a cured layer between a strengthened glass and a transparent conductive layer formed on one side of the glass, can reduce a decrease in the surface strength of the strengthened glass due to the formation of the transparent conductive layer and also has high transmittance, which has led to the present invention.

The present invention and preferred embodiments thereof provide the following specific solutions to the problem discussed above.

[1] A curable composition for forming a cured layer between a strengthened glass and a transparent conductive layer formed on one side of the glass contains a compound having an organic group and a siloxane bond.
[2] Preferably, the curable composition according to [1] is a curable composition for forming a cured layer having a thickness of 0.1 to less than 5 $\mu$m.
[3] Preferably, the content of the compound having an organic group and a siloxane bond in the curable composition according to [1] or [2] is 80% by mass or more based on the solid content of the curable composition excluding any metal oxide.
[4] Preferably, the curable composition according to any one of [1] to [3] contains at least an organically modified silicone as the compound having an organic group and a siloxane bond.
[5] Preferably, the curable composition according to any one of [1] to [4] further contains a metal oxide.
[6] A transfer film includes:

a temporary support; and
a curable composition layer containing the curable composition according to any one of [1] to [5].

[7] An image display device front panel has:

a strengthened glass;
a transparent conductive layer formed on one side of the glass; and
a cured layer disposed between the glass and the transparent conductive layer formed on the one side of the glass, and
the cured layer is a cured layer formed by curing the curable composition according to any one of [1] to [5] or is a cured layer formed by stacking the curable composition layer of the transfer film according to [6] on the glass and curing the curable composition.

[8] Preferably, the cured layer of the image display device front panel according to [7] is formed only between the

glass and the transparent conductive layer.

[9] Preferably, the cured layer of the image display device front panel according to [7] is formed as a continuous layer on the glass at least in an entire region where the transparent conductive layer is formed.

[10] A front panel and sensor assembly has the image display device front panel according to any one of [7] to [9], and the transparent conductive layer is a sensor including an electrode pattern.

[11] An image display device includes, as a component, the front panel and sensor assembly according to [10].

[12] A method for manufacturing an image display device front panel includes the steps of:

forming a layer of the curable composition according to any one of [1] to [5] on a strengthened glass or stacking the curable composition layer of the transfer film according to [6] on the glass to form a layer of the curable composition;

curing the curable composition to form a cured layer; and

forming a transparent conductive layer on the cured layer.

[13] Preferably, the curing step of the method for manufacturing an image display device front panel according to [12] is a step of heating the curable composition at 200°C or higher on the glass.

[14] Preferably, the method for manufacturing an image display device front panel according to [12] or [13] further includes a step of forming a transparent electrode pattern by providing an etching resist on the transparent conductive layer and then etching the transparent conductive layer in a region where no etching resist is provided, and

the etching resist contains at least one material selected from propylene glycol monomethyl ether acetate, propylene glycol monomethyl ether, and ethyl ethoxypropionate.

The invention provides a curable composition, for forming a cured layer between a strengthened glass and a transparent conductive layer formed on one side of the glass, that can reduce a decrease in the surface strength of the strengthened glass due to the formation of the transparent conductive layer and that has high transmittance.

## BRIEF DESCRIPTION OF THE DRAWINGS

[Fig. 1] Fig. 1 is a schematic view showing a cross-section of an example image display device front panel according to the present invention.

[Fig. 2] Fig. 2 is a schematic view showing a cross-section of another example image display device front panel according to the present invention.

[Fig. 3] Fig. 3 is an illustration showing example first and second transparent electrode patterns in the present invention.

[Fig. 4] Fig. 4 is a top view showing an example strengthened glass having an opening formed therein.

[Fig. 5] Fig. 5 is a top view showing an example image display device front panel on which a decorative layer is formed.

[Fig. 6] Fig. 6 is a top view showing an example image display device front panel on which a first transparent electrode pattern is formed.

[Fig. 7] Fig. 7 is a top view showing an example image display device front panel on which first and second transparent electrode patterns are formed.

[Fig. 8] Fig. 8 is a top view showing an example image display device front panel on which a decorative layer and conductive elements different from first and second transparent electrode patterns are formed.

[Fig. 9] Fig. 9 is a schematic view of a surface strength measurement system used for surface strength evaluation.

[Fig. 10] Fig. 10 is a schematic view showing a cross-section of an example transfer film according to the present invention.

## DESCRIPTION OF THE PREFERRED EMBODIMENTS

A curable composition, a transfer film, an image display device front panel, a front panel and sensor assembly, an image display device, and a method for manufacturing an image display device front panel according to the present invention will now be described.

Although the description of the features given below may be based on typical embodiments of the invention, these embodiments are not intended to limit the invention. As used herein, "to" is meant to include the values recited before and after "to" as the upper and lower limits thereof.

### Curable Composition

A curable composition according to the present invention is a curable composition for forming a cured layer between a strengthened glass and a transparent conductive layer formed on one side of the glass. The curable composition contains a compound having an organic group and a siloxane bond.

The curable composition according to the present invention provides a cured layer that can reduce a decrease in the surface strength of a strengthened glass due to the formation of a transparent conductive layer and that has high light transmittance. As in WO2014/030599, if the curable composition according to the present invention is used to form a cured layer between a strengthened glass and a transparent conductive layer, the decrease in the surface strength of the strengthened glass due to the formation of the transparent conductive layer can be reduced as compared with the case where a transparent conductive layer (including a transparent electrode pattern) is directly formed on a strengthened glass. In addition, since the curable composition according to the present invention contains a compound having an organic group and a siloxane bond, a cured layer formed between a strengthened glass and a transparent conductive layer formed on one side of the glass exhibits little coloration due to heat when heated during curing or other processes, and the light transmittance does not decrease. Thus, the use of the curable composition according to the present invention provides an image display device front panel with high touch panel sensitivity and high light transmittance in an image display portion.

Compound Having Organic Group and Siloxane Bond

The curable composition according to the present invention contains a compound having an organic group and a siloxane bond.

The term "compound having an organic group and a siloxane bond" refers to a compound having an organic group and a siloxane bond in one molecule.

The term "compound having a siloxane bond" refers to a compound having at least one siloxane bond in its molecule. The compound having an organic group and a siloxane bond is preferably a polysiloxane compound (i.e., silicone), which has a plurality of siloxane bonds in its molecule.

The compound having an organic group and a siloxane bond may have any type and number of organic groups at any position in its molecule.

The compound having an organic group and a siloxane bond may have organic groups such as organic groups located on silicon atoms involved in at least two siloxane bonds (located as side chains of the silicone), organic groups located on silicon atoms involved in one siloxane bond (located at the terminals of the silicone), and organic groups located on oxygen atoms involved in one siloxane bond (located at the terminals of the silicone). Preferably, the compound having an organic group and a siloxane bond has organic groups located on silicon atoms having at least two siloxane bonds (located as side chains of the silicone) or organic groups located on silicon atoms involved in one siloxane bond (located at the terminals of the silicone). More preferably, the compound having an organic group and a siloxane bond has organic groups located on silicon atoms having at least two siloxane bonds (located as side chains of the silicone) and organic groups located on silicon atoms involved in one siloxane bond (located at the terminals of the silicone) to achieve improved resistance to organic solvents, such as propylene glycol monomethyl ether acetate (PGMEA), used in etching resists for the etching of transparent conductive layers. That is, an organically modified silicone is preferred as the compound having an organic group and a siloxane bond to achieve improved organic solvent resistance.

The compound having an organic group and a siloxane bond may have organic groups used as side chains of known silicones or organic modifying groups used in known organically modified silicones. Organic modifying groups used in known organically modified silicones may be copolymer components having repeating units. Examples of organic groups include those of the example silane compounds described below. The compound having an organic group and a siloxane bond may have only one type of organic group or may have two or more types of organic groups.

The compound having an organic group and a siloxane bond preferably has one or more organic groups, more preferably two or more organic groups, in its molecule. In particular, the number of organic groups in the compound having an organic group and a siloxane bond is preferably twice or more the number of silicon atoms in the compound having an organic group and a siloxane bond.

Silicones can be classified into silicone rubbers, which are elastomers that have rubber elasticity at room temperature, and other silicones, i.e., silicone resins. The compound having an organic group and a siloxane bond in the curable composition according to the present invention is preferably a silicone resin.

Silicone Rubber

Silicone rubbers generally have good heat resistance and transparency.

A silicone rubber precursor is obtained by blending a raw-rubber-like compound having a siloxane structure (e.g., high-degree-of-polymerization dimethylpolysiloxane) and particles serving as a reinforcing material (e.g., pulverized silica), both of which are basic components, optionally with various additives. The particles serving as a reinforcing material are also referred to as "filler". A silicone rubber precursor with a particularly high degree of polymerization is referred to as "silicone rubber compound". A silicone rubber, in a narrow sense, is obtained by thermally curing a silicone

rubber precursor, optionally with the addition of a crosslinking agent such as an organic peroxide and a catalyst. As used herein, the term "silicone rubber" encompasses both silicone rubber precursors and those after thermal curing, i.e., silicone rubbers in a narrow sense.

An example silicone rubber is a silicone rubber obtained by crosslinking at least one silicone selected from silicones composed of linear polyorganosiloxanes having vinyl groups only at both terminals, silicones composed of linear polyorganosiloxanes having vinyl groups at both terminals and as side chains, silicones composed of branched polyorganosiloxanes having vinyl groups only at the terminals, and silicones composed of branched polyorganosiloxanes having vinyl groups at the terminals and as side chains.

Linear polyorganosiloxanes having vinyl groups only at both terminals are compounds represented by any of the following general formulas (Chem. 1 of Japanese Unexamined Patent Application Publication No. 2011-221368).

Silicones composed of linear polyorganosiloxanes having vinyl groups at both terminals and as side chains are compounds represented by the following general formulas (Chem. 1 of Japanese Unexamined Patent Application Publication No. 2011-221368) where some of R are vinyl groups.

[Chem. 1]

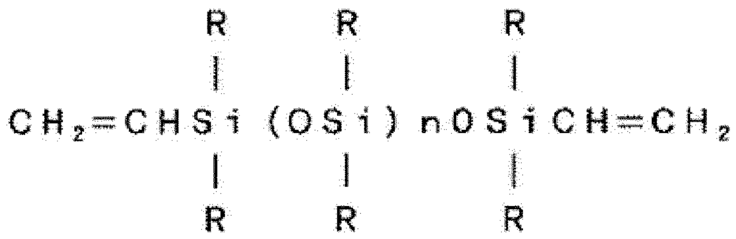

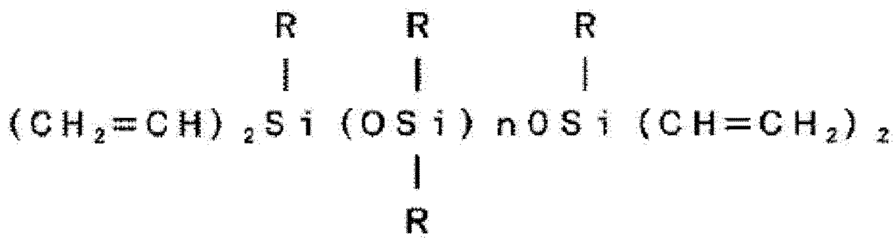

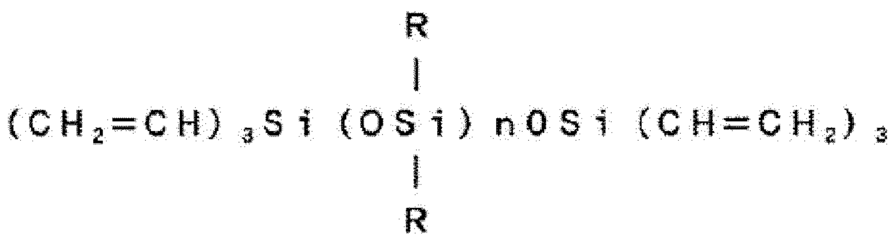

(In the formulas, R represents an organic group, and n represents an integer.)

Silicones composed of branched polyorganosiloxanes having vinyl groups only at the terminals are compounds represented by the following general formula (Chem. 2 of Japanese Unexamined Patent Application Publication No. 2011-221368).

Silicones composed of branched polyorganosiloxanes having vinyl groups at the terminals and as side chains are compounds represented by the following general formula (Chem. 2 of Japanese Unexamined Patent Application Publication No. 2011-221368) where some of R are vinyl groups.

[Chem. 2]

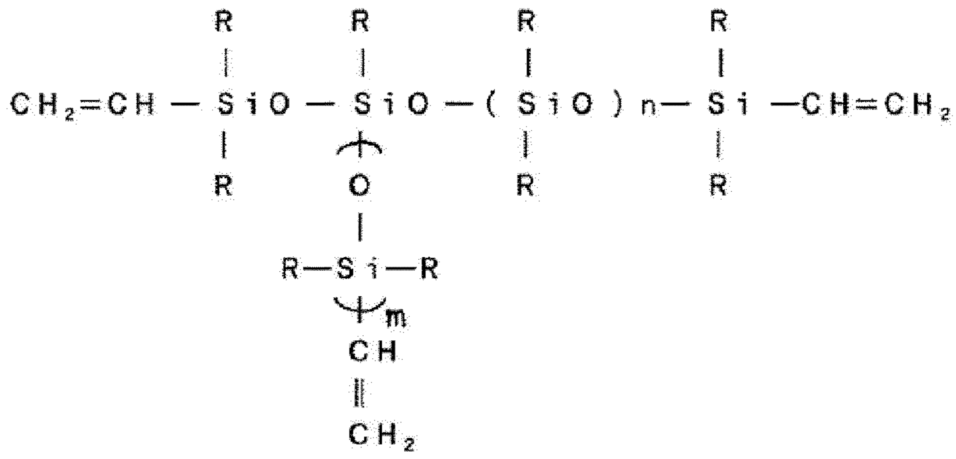

(In the formula, R represents an organic group, and m and n each independently represent an integer.)

The organic groups (R), other than vinyl groups, attached to the silicon atoms may be the same or different. For example, the organic groups (R) may be the same or different substituted or unsubstituted monovalent hydrocarbyl groups (excluding unsaturated aliphatic groups), including alkyl groups such as methyl, ethyl, and propyl groups; aryl groups such as phenyl and tolyl groups; and those in which some or all of the hydrogen atoms attached to the carbon atoms are replaced with substituents such as halogen atoms and cyano groups. Polyorganosiloxanes in which at least 50 mole percent of R are methyl groups are preferred. These polyorganosiloxanes may be used alone or in a mixture of two or more.

Known crosslinking agents may be used for the crosslinking reaction. Examples of crosslinking agents include organohydrogen polysiloxanes. Organohydrogen polysiloxanes have at least three hydrogen atoms attached to the silicon atoms in one molecule. From a practical viewpoint, it is preferred that organohydrogen polysiloxanes having two =SiH bonds in their molecules be present in an amount of up to 50% by mass of all organohydrogen polysiloxanes, with the remainder being organohydrogen polysiloxanes containing at least three ≡SiH bonds in their molecules.

Preferred catalysts for use in the crosslinking reaction include platinum catalysts. Known platinum catalysts may be used, including chloroplatinic acids such as tetrachloroplatinic acid and hexachloroplatinic acid, compounds of chloroplatinic acids with alcohols and aldehydes, and complex salts of chloroplatinic acids with various olefins. A crosslinked silicone layer is flexible like silicone rubbers, and this flexibility facilitates adhesion to an adherend.

Examples of silicone rubbers include high-degree-of-polymerization gum-like dimethylpolysiloxanes and gum-like dimethylsiloxane/methylphenylsiloxane copolymers.

Although silicone rubbers are commercially available in solvent-free, solvent-based, and emulsified forms, any form may be used in the present invention. In particular, solvent-free silicone rubbers are significantly advantageous in terms of safety, sanitation, and air pollution since no solvent is used. Solvent-free silicone rubbers are preferred for reasons of economy.

Silicone rubbers preferably contain particles, more preferably inorganic particles, even more preferably at least one of silica, titania, and zirconia particles.

Examples of silicone rubbers include those available under the trade names KE-109, KE-106, KE-1031, KE-103, KE-108, KE-581U, KE-167U, KE-1820, and KE1886 from Shin-Etsu Chemical Co., Ltd., preferably KE-167U, KE-1820, and KE-1886.

Silicone Resin

Examples of silicone resins that may be used include known silicone resins.

Silicone resins can be classified into modified silicone resins, which are silicone resins partially modified with silane compounds as described below to impart various properties, and straight silicone resins, which are obtained by the dehydration condensation of silane compounds having an alkoxy or silanol group and which exhibit the intrinsic properties of silicones. Preferred silicone resins include organically modified silicone resins and straight silicone resins, more preferably organically modified silicone resins. That is, the curable composition according to the present invention preferably contains at least an organically modified silicone as the compound having an organic group and a siloxane bond.

Examples of modified silicone resins that may be used include polyester-modified silicone resins (e.g., KR-5230 and KR-5235 available from Shin-Etsu Chemical Co., Ltd.), which are obtained by reacting hydroxy or other groups of a polyester with a silane compound; acrylic-modified silicone resins (e.g., KR-9706 available from Shin-Etsu Chemical Co., Ltd.), which are obtained by polymerizing an acrylic monomer, such as acrylic acid, reacted with a silane compound or by copolymerizing such a monomer with other acrylic monomers; epoxy-modified silicone resins (e.g., ES-1002T and ES-1023 available from Shin-Etsu Chemical Co., Ltd.), which are obtained by reacting amino residues or other groups of a resin with an epoxy-containing silane compound; polyimide-modified silicones (e.g., MP-2003PGMEA available from Shin-Etsu Chemical Co., Ltd.); alkyl-modified silicones; fluorine-modified silicones; polyether-modified silicones; amino-modified silicones; phenol-modified silicones; carboxy-modified silicones (e.g., X-22-3710ST available from Shin-Etsu Chemical Co., Ltd.); methacrylic-modified silicones; alkyd-modified silicone resins (e.g., KR-5206 available from Shin-Etsu Chemical Co., Ltd.), which are obtained by modifying an alkyd resin with a reactive silane compound; alkoxy-oligomer-modified silicones (e.g., KR-251, X-40-9246, KR-400, and KR-401 available from Shin-Etsu Chemical Co., Ltd.); and rubbery silicone resins obtained by directly forming covalent bonds in a resin using an oxime initiator. In particular, to achieve improved resistance to organic solvents, such as PGMEA, used in etching resists for the etching of transparent conductive layers, the curable composition according to the present invention preferably contains, as the organically modified silicone, at least one of a polyester-modified silicone, an acrylic-modified silicone, an epoxy-modified silicone, a polyimide-modified silicone, an alkyl-modified silicone, a fluorine-modified silicone, a polyether-modified silicone, an amino-modified silicone, a phenol-modified silicone, a carboxy-modified silicone, a methacrylic-modified silicone, and an alkyd-modified silicone, more preferably at least one of a polyester-modified silicone, an epoxy-modified silicone, a polyimide-modified silicone, a carboxy-modified silicone, and an alkyd-modified silicone, even more preferably a polyester-modified silicone or an epoxy-modified silicone.

The structures of the silicone components of these organically modified silicones are similar to the preferred structures of straight silicone resins described below.

Examples of straight silicone resins that may be used include those containing, in their molecules, at least a siloxane structure represented by general formula (1):

[Chem. 3]

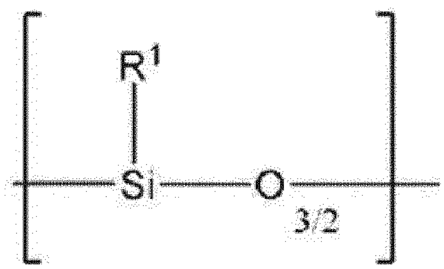

General formula (1)

In general formula (1), $R^1$ is independently a hydrogen atom, a halogen atom, a linear, branched, or cyclic alkoxy group of 1 to 20 carbon atoms, a linear, branched, or cyclic alkyl group of 1 to 20 carbon atoms, a linear, branched, or cyclic substituted alkyl group of 1 to 20 carbon atoms, a linear, branched, or cyclic alkenyl group of 2 to 20 carbon atoms, an aryl group of 6 to 20 carbon atoms, or an aralkyl group of 7 to 20 carbon atoms, where each $R^1$ may be the same or different. That is, straight silicone resins having the siloxane structure represented by general formula (1) above may be condensates of the same siloxane structure or co-condensates of combinations of different siloxane structures.

Examples of halogen atoms for $R^1$ include fluorine and chlorine atoms.

Examples of linear, branched, and cyclic alkoxy groups of 1 to 20 carbon atoms for $R^1$ include methoxy, ethoxy, n-propoxy, isopropoxy, n-butoxy, isobutoxy, sec-butoxy, t-butoxy, n-pentyloxy, n-hexyloxy, cyclopentyloxy, and cyclohexyloxy groups.

Examples of linear, branched, and cyclic alkyl groups of 1 to 20 carbon atoms for $R^1$ include methyl, ethyl, n-propyl, isopropyl, n-butyl, isobutyl, sec-butyl, t-butyl, n-pentyl, n-hexyl, cyclopentyl, and cyclohexyl groups. Preferred linear, branched, and cyclic alkyl groups of 1 to 20 carbon atoms for $R^1$ include alkyl groups of 1 to 3 carbon atoms, more preferably methyl groups.

Examples of linear, branched, and cyclic substituted alkyl groups of 1 to 20 carbon atoms for $R^1$ include arylalkyl, fluoroalkyl, chloroalkyl, hydroxyalkyl, (meth)acryloxyalkyl, and mercaptoalkyl groups. Specific examples include arylalkyl groups such as phenylmethyl (benzyl), diphenylmethyl, 1-phenylethyl, 2-phenylethyl, 1-phenyl-n-propyl, 2-phenyl-2-propyl (cumyl), 3-phenyl-n-propyl, 1-phenylbutyl, 2-phenylbutyl, 3-phenylbutyl, 4-phenylbutyl, 1-phenylpentyl, 2-phenylpentyl, 3-phenylpentyl, 4-phenylpentyl, 5-phenylpentyl, 1-phenylhexyl, 2-phenylhexyl, 3-phenylhexyl, 4-phenylhexyl,

5-phenylhexyl, 6-phenylhexyl, 1-phenylcyclohexyl, 2-phenylcyclohexyl, 3-phenylcyclohexyl, 1-phenylheptyl, 2-phenylheptyl, 3-phenylheptyl, 4-phenylheptyl, 5-phenylheptyl, 6-phenylheptyl, 1-phenyloctyl, 2-phenyloctyl, 3-phenyloctyl, 4-phenyloctyl, 5-phenyloctyl, 6-phenyloctyl, 1-naphthylethyl, 2-naphthylethyl, 1-naphthyl-n-propyl, 2-naphthyl-2-propyl, 3-naphthyl-n-propyl, 1-naphthylbutyl, 2-naphthylbutyl, 3-naphthylbutyl, 4-naphthylbutyl, 1-naphthylpentyl, 2-naphthylpentyl, 3-naphthylpentyl, 4-naphthylpentyl, 5-naphthylpentyl, 1-naphthylhexyl, 2-naphthylhexyl, 3-naphthylhexyl, 4-naphthylhexyl, 5-naphthylhexyl, 6-naphthylhexyl, 1-naphthylcyclohexyl, 2-naphthylcyclohexyl, 3-naphthylcyclohexyl, 1-naphthylheptyl, 2-naphthylheptyl, 3-naphthylheptyl, 4-naphthylheptyl, 5-naphthylheptyl, 6-naphthylheptyl, 1-naphthyloctyl, 2-naphthyloctyl, 3-naphthyloctyl, 4-naphthyloctyl, 5-naphthyloctyl, and 6-naphthyloctyl groups; fluoroalkyl groups such as fluoromethyl, trifluoromethyl, 2-fluoroethyl, (trifluoromethyl)methyl, pentafluoroethyl, 3-fluoro-n-propyl, 2-(trifluoromethyl)ethyl, (pentafluoroethyl)methyl, heptafluoro-n-propyl, 4-fluoro-n-butyl, 3-(trifluoromethyl)-n-propyl, 2-(pentafluoroethyl)ethyl, (heptafluoro-n-propyl)methyl, nonafluoro-n-butyl, 5-fluoro-n-pentyl, 4-(trifluoromethyl)-n-butyl, 3 -(pentafluoroethyl)-n-propyl, 2-(heptafluoro-n-propyl)ethyl, (nonafluoro-n-butyl)methyl, perfluoro-n-pentyl, 6-fluoro-n-hexyl, 5-(trifluoromethyl)-n-pentyl, 4-(pentafluoroethyl)-n-butyl, 3-(heptafluoro-n-propyl)-n-propyl, 2-(nonafluoro-n-butyl)ethyl, (perfluoro-n-pentyl)methyl, perfluoro-n-hexyl, 7-(trifluoromethyl)-n-heptyl, 6-(pentafluoroethyl)-n-hexyl, 5 -(heptafluoro-n-propyl)-n-pentyl, 4-(nonafluoro-n-butyl)-n-butyl, 3 -(perfluoro-n-pentyl)-n-propyl, 2-(perfluoro-n-hexyl)ethyl, (perfluoro-n-heptyl)methyl, perfluoro-n-octyl, 9-(trifluoromethyl)-n-nonyl, 8-(pentafluoroethyl)-n-octyl, 7-(heptafluoro-n-propyl)-n-heptyl, 6-(nonafluoro-n-butyl)-n-hexyl, 5-(perfluoro-n-pentyl)-n-pentyl, 4-(perfluoro-n-hexyl)-n-butyl, 3 -(perfluoro-n-heptyl)-n-propyl, 2-(perfluoro-n-octyl)ethyl, (perfluoro-n-nonyl)methyl, perfluoro-n-decyl, 4-fluorocyclopentyl, and 4-fluorocyclohexyl groups; and other groups such as chloromethyl, 2-chloroethyl, 3-chloro-n-propyl, 4-chloro-n-butyl, 3-chlorocyclopentyl, 4-chlorocyclohexyl, hydroxymethyl, 2-hydroxyethyl, 3-hydroxycyclopentyl, 4-hydroxycyclohexyl, 3-(meth)acryloxypropyl, and 3-mercaptopropyl groups.

Examples of linear, branched, and cyclic alkenyl groups of 2 to 20 carbon atoms for $R^1$ include vinyl, 1-methylvinyl, 1-propenyl, allyl (2-propenyl), 2-methyl-2-propenyl, 1-butenyl, 2-butenyl, 3-butenyl, 3-cyclopentenyl, and 3-cyclohexenyl groups. Preferred linear, branched, and cyclic substituted alkyl groups of 1 to 20 carbon atoms for $R^1$ include arylalkyl groups, more preferably cumyl groups.

Examples of aryl groups of 6 to 20 carbon atoms for $R^1$ include phenyl, o-tolyl, m-tolyl, p-tolyl, 2,3-xylyl, 2,4-xylyl, 2,5-xylyl, 2,6-xylyl, 3,4-xylyl, 3,5-xylyl, and 1-naphthyl groups. Among these aryl groups of 6 to 20 carbon atoms for $R^1$, those other than unsubstituted phenyl groups are preferred, including o-tolyl, m-tolyl, p-tolyl, 2,3-xylyl, 2,4-xylyl, 2,5-xylyl, 2,6-xylyl, 3,4-xylyl, 3,5-xylyl, and 1-naphthyl groups, more preferably o-tolyl, m-tolyl, and p-tolyl groups, since they produce less benzene when heated.

Examples of aralkyl groups of 7 to 20 carbon atoms for $R^1$ include benzyl and phenethyl groups.

In general formula (1) above, $R^1$ preferably independently represents a hydrogen atom, a linear, branched, or cyclic alkyl group of 1 to 20 carbon atoms, a linear, branched, or cyclic substituted alkyl group of 1 to 6 carbon atoms, or an aryl group of 6 to 9 carbon atoms, more preferably a hydrogen atom, a methyl group, a phenyl group, or a tolyl group.

The siloxane structure represented by general formula (1) above preferably contains a methyl group as $R^1$ so that the L value of a decorative layer can be significantly increased.

Straight silicone resins that are copolymers of two or more siloxane structures represented by general formula (1) above and having different groups as $R^1$ are also preferred. In this case, a preferred example is a copolymer of a siloxane structure represented by general formula (1) above where $R^1$ is an alkyl group and a siloxane structure represented by general formula (1) above where $R^1$ is a hydrogen atom, a substituted alkyl group, or an aryl group. Although any copolymerization ratio may be used, a siloxane structure represented by general formula (1) above where $R^1$ is an alkyl group is preferably present in an amount of 50 to 100 mole percent, more preferably 60 to 100 mole percent, even more preferably 70 to 100 mole percent, of all siloxane structures represented by general formula (1) above.

Other preferred straight silicone resins that may be used in the present invention include those containing, in their molecules, a siloxane structure formed by the co-condensation of a siloxane structure represented by general formula (1) above with a siloxane structure represented by general formula (2):

[Chem. 4]

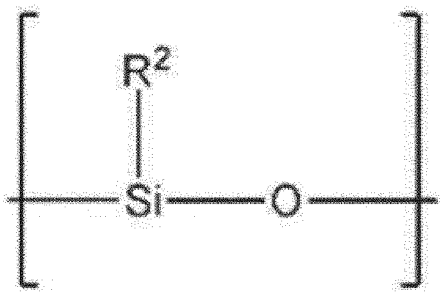

General formula (2)

In general formula (2), $R^2$ is similar to $R^1$ in general formula (1) above, and the preferred range is also similar to that of $R^1$

Specific examples of straight silicone resins that may be used include alkyl straight silicones (e.g., methyl straight silicones), which are prepared by the condensation of silane compounds having an alkyl group of 1 to 20 carbon atoms and an alkoxy group; alkyl aryl straight silicones such as methyl phenyl straight silicones; aryl straight silicones such as phenyl straight silicones; and hydrogen straight silicones such as methyl hydrogen straight silicones.

Preferred examples of straight silicone resins include methyl straight silicone resins, methyl tolyl straight silicone resins, methyl phenyl straight silicone resins, acrylic-resin-modified silicone resins, methyl hydrogen straight silicone resins, and hydrogen tolyl straight silicone resins. In particular, methyl straight silicone resins, methyl tolyl straight silicone resins, methyl hydrogen straight silicone resins, and hydrogen tolyl straight silicone resins are preferred since they produce no benzene when heated and a decrease in lightness can be reduced.

These silicone resins may be used alone or in a combination of two or more and may be mixed in any ratio to control the layer physical properties.

Straight silicone resins preferably have a weight average molecular weight of 1,000 to 5,000,000, more preferably 2,000 to 3,000,000, even more preferably 2,500 to 3,000,000. A molecular weight of 1,000 or more results in good layer-forming properties.

As used herein, the weight average molecular weight may be determined, for example, by gel permeation chromatography (GPC). Specifically, the weight average molecular weight may be determined under the following conditions:

- Column: TSKgel Super HZM-H GPC column (available from Tosoh Corporation)
- Solvent: tetrahydrofuran
- Standard material: monodisperse polystyrene

Examples of silane compounds used for the preparation of modified silicone resins and straight silicone resins include trialkoxy-, triacyloxy-, and triphenoxysilanes such as tetramethoxysilane, tetraethoxysilane, tetra-n-propoxysilane, tetraisopropoxysilane, tetra-n-butoxysilane, tetraisobutoxysilane, methyltrimethoxysilane, methyltriethoxysilane, methyltriacetoxysilane, methyltributoxysilane, ethyltrimethoxysilane, ethyltriethoxysilane, isobutyltrimethoxysilane, propyltrimethoxysilane, vinyltrimethoxysilane, vinyltriethoxysilane, vinyltrimethoxyethoxysilane, phenyltrimethoxysilane, phenyltriethoxysilane, phenyltriacetoxysilane, cumyltrimethoxysilane, tolyltrimethoxysilane, 3,3,3-trifluoropropyltrimethoxysilane, γ-methacryloxypropyltrimethoxysilane, γ-aminopropyltrimethoxysilane, γ-aminopropyltriethoxysilane, γ-mercaptopropyltrimethoxysilane, γ-mercaptopropyltriethoxysilane, N-β(aminoethyl)-γ-aminopropyltrimethoxysilane, N-β(aminoethyl)-γ-aminopropyltriethoxysilane, β-cyanoethyltriethoxysilane, methyltriphenoxysilane, glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltrimethoxyethoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltrimethoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, and δ-(3,4-epoxycyclohexyl)butyltriethoxysilane; alkoxysilanes and diacyloxysilanes such as phenylmethyldimethoxysilane, phenylmethyldiethoxysilane,

dimethyldiacetoxysilane, γ-methacryloxypropylmethyldimethoxysilane, γ-methacryloxypropylmethyldiethoxysilane, γ-mercaptopropylmethyldimethyldimethoxysilane, γ-mercaptopropyldiethoxysilane, γ-aminopropylmethyldimethoxysilane, γ-aminopropylmethyldiethoxysilane, vinylmethyldimethoxysilane, vinylmethyldiethoxysilane, glycidoxymethyldimethoxysilane, glycidoxymethyldiethoxysilane, α-glycidoxyethylmethyldimethoxysilane, α-glycidoxyethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldimethoxyethoxysilane, γ-glycidoxypropylmethyldiphenoxysilane, γ-glycidoxypropylethyldimethoxysilane, γ-glycidoxypropylethyldiethoxysilane, γ-glycidoxypropylethyldipropoxysilane, γ-glycidoxypropylvinyldimethoxysilane, γ-glycidoxypropylvinyldiethoxysilane, γ-glycidoxypropylphenyldimethoxysilane, and γ-glycidoxypropylphenyldiethoxysilane; and other silane compounds such as dimethoxymethylsilane, trimethoxysilane, dimethylethoxysilane, diacetoxymethylsilane, diethoxymethylsilane, diethylmethylsilane, triethylsilane, butyldimethylsilane, dimethylphenylsilane, methylphenylvinylsilane, diphenylmethylsilane, tripropylsilane, tripentyloxysilane, triphenylsilane, trihexylsilane, diethylsilane, allyldimethylsilane, methylphenylsilane, diphenylsilane, phenylsilane, octylsilane, 1,4-bis(dimethylsilyl)benzene, 1,1,3,3-tetramethyldisiloxane, dimethyltolylsilane, methyltolylvinylsilane, ditolylmethylsilane, tritolylsilane, dimethylbenzylsilane, methylbenzylvinylsilane, dibenzylmethylsilane, tribenzylsilane, diphenylsilane, 2-chloroethylsilane, bis[(p-dimethylsilyl)phenyl] ether, 1,4-dimethyldisilylethane, 1,3,5-tris(dimethylsilyl)benzene, 1,3,5-trimethyl-1,3,5-trisilane, poly(methylsilylene)phenylene, poly(methylsilylene)methylene, tetrachlorosilane, trichlorosilane, triethoxysilane, tri-n-propoxysilane, tri-isopropoxysilane, tri-n-butoxysilane, tri-sec-butoxysilane, fluorotrichlorosilane, fluorotrimethoxysilane, fluorotriethoxysilane, fluorotri-n-propoxysilane, fluorotri-isopropoxysilane, fluorotri-n-butoxysilane, fluorotri-sec-butoxysilane, methyltrichlorosilane, methyltri-n-propoxysilane, methyltri-isopropoxysilane, methyltri-n-butoxysilane, methyltri-sec-butoxysilane, 2-(trifluoromethyl)ethyltrichlorosilane, 2-(trifluoromethyl)ethyltrimethoxysilane, 2-(trifluoromethyl)ethyltriethoxysilane, 2-(trifluoromethyl)ethyltri-n-propoxysilane, 2-(trifluoromethyl)ethyltri-isopropoxysilane, 2-(trifluoromethyl)ethyltri-n-butoxysilane, 2-(trifluoromethyl)ethyltri-sec-butoxysilane, 2-(perfluoro-n-hexyl)ethyltrichlorosilane, 2-(perfluoro-n-hexyl)ethyltrimethoxysilane, 2-(perfluoro-n-hexyl)ethyltriethoxysilane, 2-(perfluoro-n-hexyl)ethyltri-n-propoxysilane, 2-(perfluoro-n-hexyl)ethyltri-isopropoxysilane, 2-(perfluoro-n-hexyl)ethyltri-n-butoxysilane, 2-(perfluoro-n-hexyl)ethyltri-sec-butoxysilane, 2-(perfluoro-n-octyl)ethyltrichlorosilane, 2-(perfluoro-n-octyl)ethyltrimethoxysilane, 2-(perfluoro-n-octyl)ethyltriethoxysilane, 2-(perfluoro-n-octyl)ethyltri-n-propoxysilane, 2-(perfluoro-n-octyl)ethyltri-isopropoxysilane, 2-(perfluoro-n-octyl)ethyltri-n-butoxysilane, 2-(perfluoro-n-octyl)ethyltri-sec-butoxysilane, hydroxymethyltrichlorosilane, hydroxymethyltrimethoxysilane, hydroxyethyltrimethoxysilane, hydroxymethyltri-n-propoxysilane, hydroxymethyltri-isopropoxysilane, hydroxymethyltri-n-butoxysilane, hydroxymethyltri-sec-butoxysilane, 3-(meth)acryloxypropyltrichlorosilane, 3-(meth)acryloxypropyltrimethoxysilane, 3 -(meth)acryloxypropyltriethoxysilane, 3-(meth)acryloxypropyltri-n-propoxysilane, 3 -(meth)acryloxypropyltri-isopropoxysilane, 3-(meth)acryloxypropyltri-n-butoxysilane, 3 -(meth)acryloxypropyltri-sec-butoxysilane, 3-mercaptopropyltrichlorosilane, 3 -mercaptopropyltrimethoxysilane, 3-mercaptopropyltriethoxysilane, 3 -mercaptopropyltri-n-propoxysilane, 3 -mercaptopropyltri-isopropoxysilane, 3 -mercaptopropyltri-n-butoxysilane, 3 -mercaptopropyltri-sec-butoxysilane, vinyltrichlorosilane, vinyltri-n-propoxysilane, vinyltri-isopropoxysilane, vinyltri-n-butoxysilane, vinyltri-sec-butoxysilane, allyltrichlorosilane, allyltrimethoxysilane, allyltriethoxysilane, allyltri-n-propoxysilane, allyltri-isopropoxysilane, allyltri-n-butoxysilane, allyltri-sec-butoxysilane, phenyltrichlorosilane, phenyltri-n-propoxysilane, phenyltri-isopropoxysilane, phenyltri-n-butoxysilane, phenyltri-sec-butoxysilane, methyldichlorosilane, methyldiethoxysilane, methyldi-n-propoxysilane, methyldi-isopropoxysilane, methyldi-n-butoxysilane, methyldi-sec-butoxysilane, dimethyldichlorosilane, dimethyldimethoxysilane, dimethyldiethoxysilane, dimethyldi-n-propoxysilane, dimethyldi-isopropoxysilane, dimethyldi-n-butoxysilane, dimethyldi-sec-butoxysilane, (methyl) [2-(perfluoro-n-octyl)ethyl]dichlorosilane, (methyl)[2-(perfluoro-n-octyl)ethyl]dimethoxysilane, (methyl)[2-(perfluoro-n-octyl)ethyl]diemethoxysilane, (methyl)[2-(perfluoro-n-octyl)ethyl]di-n-propoxysilane, (methyl) [2-(perfluoro-n-octyl)ethyl] di-isopropoxysilane, (methyl) [2-(perfluoro-n-octyl)ethyl]di-n-butoxysilane, (methyl)[2-(perfluoro-n-octyl)ethyl]di-sec-butoxysilane, (methyl)(y-glycidoxypropyl)dichlorosilane, (methyl)(y-glycidoxypropyl)dimethoxysilane, (methyl)(γ-glycidoxypropyl)diethoxysilane, (methyl)(γ-glycidoxypropyl)di-n-propoxysilane, (methyl)(γ-glycidoxypropyl)di-isopropoxysilane, (methyl)(γ-glycidoxypropyl)di-n-butoxysilane, (methyl)(γ-glycidoxypropyl)di-sec-butoxysilane, (methyl)(3 -mercaptopropyl)dichlorosilane, (methyl)(3 - mercaptopropyl)dimethoxysilane, (methyl)(3-mercaptopropyl)diethoxysilane, (methyl)(3-mercaptopropyl)di-n-propoxysilane, (methyl)(3-mercaptopropyl)di-isopropoxysilane, (methyl)(3-mercaptopropyl)di-n-butoxysilane, (methyl)(3-mercaptopropyl)di-sec-butoxysilane, (methyl)(vinyl)dichlorosilane, (methyl)(vinyl)dimethoxysilane, (methyl)(vinyl)diethoxysilane, (methyl)(vinyl)di-n-propoxysilane, (methyl)(vinyl)di-isopropoxysilane, (methyl)(vinyl)di-n-butoxysilane, (methyl)(vinyl)di-sec-butoxysilane, divinyldichlorosilane, divinyldimethoxysilane, divinyldiethoxysilane, divinyldi-n-propoxysilane, divinyldi-isopropoxysilane, divinyldi-n-butoxysilane, divinyldi-sec-butoxysilane, diphenyldichlorosilane, diphenyldimethoxysilane, diphenyldiethoxysilane, diphenyldi-n-propoxysilane, diphenyldi-isopropoxysilane, diphenyldi-n-butoxysilane, diphenyldi-sec-butoxysilane, chlorodimethylsilane, methoxydimethylsilane, ethoxydimethylsilane, chlorotrimethylsilane, bromotrimethylsilane, iodotrimethylsilane, methoxytrimethylsilane, ethoxytrimethylsilane, n-propoxytrimethylsilane, isopropoxytrimethylsilane, n-butoxytrimethylsilane, sec-butoxytrimethylsilane, t-butoxytrimethylsilane, (chloro)(vinyl)dimethylsilane, (methoxy)(vinyl)dimethylsilane, (ethoxy)(vinyl)dimethylsilane, (chloro)(methyl)diphenylsilane, (methoxy)(methyl)diphenylsilane, and (ethoxy)(methyl)diphenylsilane. It should be understood, however, that these specific examples are not intended to limit the present invention.

Commercially available silicone resins, including modified silicone resins and straight silicone resins, may be used. Examples of such silicone resins include those available under the following trade names:

KC-89, KC-89S, X-21-3153, X-21-5841, X-21-5842, X-21-5843, X-21-5844, X-21-5845, X-21-5846, X-21-5847, X-21-5848, X-22-160AS, X-22-170B, X-22-170BX, X-22-170D, X-22-170DX, X-22-176B, X-22-176D, X-22-176DX, X-22-176F, X-22-3710ST, X-40-2308, X-40-2651, X-40-2655A, X-40-2671, X-40-2672, X-40-9220, X-40-9225, X-40-9226, X-40-9227, X-40-9246, X-40-9247, X-40-9250, X-40-9323, X-40-2460M, X-41-1053, X-41-1056, X-41-1805, X-41-1810, KF6001, KF6002, KF6003, KR-212, KR-213, KR-217, KR-220, KR-240, KR-242A, KR-251, KR-253, KR-255, KR-271, KR-282, KR-300, KR-311, KR-400, KR-401N, KR-500, KR-510, KR-5206, KR-5230, KR-5235, KR-9218, KR-9706, KR-165, SMP-2003PGMEA, and ES-1023 (all available from Shin-Etsu Chemical Co., Ltd.);
SH804, SH805, SH806A, SH840, SR2400, SR2402, SR2405, SR2406, SR2410, SR2411, SR2416, and SR2420 (all available from Dow Corning Toray Co., Ltd.);
YR3187, YR3370, and TSR127B (all available from Momentive Performance Materials Japan LLC);
FZ3711 and FZ3722 (both available from Nippon Unicar Co., Ltd.);
DMS-S12, DMS-S15, DMS-S21, DMS-S27, DMS-S31, DMS-S32, DMS-S33, DMS-S35, DMS-S38, DMS-S42, DMS-S45, DMS-S51, DMS-227, PSD-0332, PDS-1615, PDS-9931, and XMS-5025 (all available from Chisso Corporation);
Methyl Silicate MS51 and Methyl Silicate MS56 (both available from Mitsubishi Chemical Corporation);
Ethyl Silicate 28, Ethyl Silicate 40, and Ethyl Silicate 48 (all available from Colcoat Co., Ltd.); and
partial condensates such as Glass Resin GR100, GR650, GR908, and GR950 (all available from Showa Denko K.K.).

It should be understood, however, that these specific examples are not intended to limit the present invention.

The content of the compound having an organic group and a siloxane bond in the curable composition according to the present invention is preferably 80% by mass or more, more preferably 85% by mass or more, even more preferably 90% by mass or more, yet even more preferably 95% by mass or more, based on the solid content of the curable composition excluding any metal oxide.

Other Polymerizable Compound

The curable composition may contain a polymerizable compound other than the compound having an organic group and a siloxane bond.

The other polymerizable compound is preferably a photopolymerizable compound. The photopolymerizable compound may have any photopolymerizable group, such as an ethylenically unsaturated group or an epoxy group. Preferably, the polymerizable compound used in the curable composition is an ethylenically-unsaturated-bond containing compound, more preferably a compound having a (meth)acryloyl group.

Examples of ethylenically-unsaturated-bond containing compounds that may be used include polymerizable compounds disclosed in paragraphs [0023] and [0024] of Japanese Patent No. 4098550 and difunctional polymerizable compounds such as tricyclodecanediol dimethanol diacrylate.

Preferred examples of polymerizable compounds that may be used in the curable composition include polymerizable compounds having at least five ethylenically unsaturated groups, such as dipentaerythritol hexaacrylate (DPHA), dipentaerythritol (penta/hexa)acrylate, and tripentaerythritol octaacrylate; urethane monomers such as urethane (meth)acrylate compounds; and difunctional polymerizable compounds such as ethoxylated Bisphenol A diacrylate and tricyclodecanediol dimethanol diacrylate.

For reasons of sensitivity, the curable composition preferably contains a polymerizable compound having at least five ethylenically unsaturated groups.

Although these other photopolymerizable compounds may be used alone or in a combination of two or more, the use of a combination of two or more photopolymerizable compounds is preferred for reasons of sensitivity.

The other polymerizable compound is preferably used in an amount of 50% by mass or less, more preferably 20% by mass or less, even more preferably 10% by mass or less, yet even more preferably 5% by mass or less, further preferably substantially 0% by mass, based on the content of the compound having an organic group and a siloxane bond.

The other polymerizable compound preferably has an average molecular weight of 200 to 3,000, more preferably 250 to 2,600, even more preferably 280 to 2,200.

Catalyst

The curable composition preferably contains a catalyst so that the cured layer containing the compound having an organic group and a siloxane bond can be cured to reduce brittleness. In particular, if two or more compounds having an organic group and a siloxane bond are used, a catalyst is preferably used to promote crosslinking through dehydration and dealcoholization condensation reactions.

Examples of catalysts that may be used include known catalysts.

Preferred examples of catalysts include organometallic compound catalysts such as organic complexes and organic acid salts containing, as a metal component, at least one metal selected from the group consisting of tin (Sn), zinc (Zn), iron (Fe), titanium (Ti), zirconium (Zr), bismuth (Bi), hafnium (Hf), yttrium (Y), aluminum (Al), boron (B), and gallium (Ga).

Among these metals, Sn, Ti, Zn, Zr, Hf, and Ga are preferred for their high reaction activity. Zn and Ti are more preferred to prevent cracking during baking, and Zn is even more preferred to achieve an improved pot life.

Examples of organometallic compound catalysts containing zinc (Zn) include zinc triacetylacetonate, zinc stearate, and bis(acetylacetonato)zinc(II) (monohydrate).

Preferred examples of organometallic compound catalysts containing tin (Sn), titanium (Ti), zirconium (Zr), hafnium (Hf), or gallium (Ga) that may be used include those disclosed in Japanese Unexamined Patent Application Publication No. 2012-238636.

Other examples of catalysts that may be used include commercially available catalysts. One such example is D-15 (available from Shin-Etsu Chemical Co., Ltd.), which is a zinc condensation catalyst.

These catalysts may be used alone. Alternatively, any combination of two or more catalysts may be used in any ratio. Reaction promotors and reaction inhibitors may also be used in combination.

To prevent cracking during baking and to achieve an improved pot life, it is preferred that the content of the catalyst be 0.01% to 10% by mass, more preferably 0.03% to 5.0% by mass, based on the content of the compound having an organic group and a siloxane bond.

Polymerization Initiator

The curable composition may or may not contain a photocurable resin and a photopolymerization initiator. Examples of photopolymerization initiators that may be used in the curable composition include those disclosed in [0031] to [0042] of Japanese Unexamined Patent Application Publication No. 2011-95716.

Preferably, the curable composition according to the present invention contains no photopolymerization initiator. Thus, the compound having an organic group and a siloxane bond is preferably thermosetting.

Metal Oxide

The curable composition according to the present invention preferably further contains a metal oxide. This avoids the problem that a transparent electrode pattern formed by patterning a transparent conductive layer is visible (skeleton visibility). Thus, in the present invention, the cured layer preferably functions as a refractive-index control layer.

The curable composition preferably contains metal oxide particles for the control of refractive index and optical transparency. The use of metal oxide particles, which are optically transparent with high refractive index and high transparency, provides a curable composition with good transparency that has a high refractive index, i.e., closer in refractive index to the transparent conductive layer than the strengthened glass is. PTL 1 mentioned above (WO2014/030599) discloses the use of an "underlying insulating layer formed of a transparent organic compound"; this literature does not contemplate the addition of a metal oxide to the underlying insulating layer.

The metal oxide particles preferably have a higher refractive index than the curable composition excluding the metal oxide particles. Specifically, the metal oxide particles preferably have a refractive index of 1.50 or more, more preferably 1.70 or more, even more preferably 1.90 or more, for light having wavelengths of 400 to 750 nm.

By "a refractive index of 1.50 or more for light having wavelengths of 400 to 750 nm", it is meant that the average refractive index for light components having wavelengths within the above range is 1.50 or more; the refractive index does not need to be 1.50 or more for all light components having wavelengths within the above range. The average refractive index is the sum of the refractive indices measured for all light components having wavelengths within the above range divided by the number of measurements.

The term "metal" for the metal oxide particles encompasses metalloids such as B, Si, Ge, As, Sb, and Te.

Preferred examples of optically transparent metal oxide particles with high refractive index include oxide particles containing atoms such as Be, Mg, Ca, Sr, Ba, Sc, Y, La, Ce, Gd, Tb, Dy, Yb, Lu, Ti, Zr, Hf, Nb, Mo, W, Zn, B, Al, Si, Ge, Sn, Pb, Sb, Bi, and Te atoms, more preferably titanium oxide, titanium composite oxide, zinc oxide, zirconium oxide, indium tin oxide, and antimony tin oxide particles, even more preferably titanium oxide, titanium composite oxide, and

zirconium oxide particles, yet even more preferably titanium oxide and zirconium oxide particles, most preferably titanium dioxide particles. A preferred titanium dioxide is rutile-type titanium dioxide, which has a particularly high refractive index. These metal oxide particles may be surface-treated with organic materials to impart dispersion stability.

The metal oxide particles preferably have an average primary particle size of 1 to 200 nm, more preferably 3 to 80 nm, for reasons of the transparency of the curable composition. As used herein, the term "average primary particle size" for particles refers to the arithmetic mean of the particle sizes of 200 randomly selected particles measured under an electron microscope. The particle size of a nonspherical particle is defined as the length of the longest side of that particle.

These metal oxide particles may be used alone or in a combination of two or more. Other examples of metal oxides that may be used include those disclosed in paragraph [0021] of Japanese Unexamined Patent Application Publication No. 2013-97362.

The content of the metal oxide particles in the curable composition may be determined depending on, for example, the required refractive index and optical transparency of the optical member formed from the curable composition. Preferably, the content of the metal oxide particles is 5% to 80% by mass, more preferably 5% to 70% by mass, even more preferably 10% to 70% by mass, based on the total solid content of the curable composition.

The curable composition preferably has at least one of zirconium oxide particles and titanium oxide particles, more preferably zirconium oxide particles, to control the refractive index of the cured layer to the preferred range.

If the metal oxide particles are zirconium oxide particles, the zirconium oxide particles are preferably present in the curable composition in an amount of 40.0% to 80% by mass, more preferably 40.0% to 70% by mass, even more preferably 40.0% to 69.8% by mass, yet even more preferably more than 40.0% to 69.8% by mass, further preferably 50.0% to 65.0% by mass, most preferably 60.0% to 65.0% by mass. If the metal oxide particles are titanium oxide particles, the titanium oxide particles are preferably present in the curable composition in an amount of 30% to 70% by mass.

The content of the metal oxide particles in the cured layer formed from the curable composition may be measured by the following method.

After a sectional surface is formed by cutting the cured layer, the sectional surface is examined under a transmission electron microscope (TEM). The ratio of the area occupied by the metal oxide particles to the cross-sectional area of the cured layer is measured at three randomly selected positions within the layer, and these ratios are averaged to determine the volume fraction (VR).

The weight fraction (WR) of the metal oxide particles in the cured layer is calculated by converting the volume fraction (VR) to the weight fraction (WR) by the following equation:

$$WR = 1/(1.1*(1/(D*VR)-1)+1)$$

D: specific gravity of metal oxide particles

This calculation may be based on the assumption that D = 4.0 if the metal oxide particles are titanium oxide particles and that D = 6.0 if the metal oxide particles are zirconium oxide particles.

Additives

Other additives may also be used in the curable composition. Examples of additives include surfactants disclosed in paragraph [0017] of Japanese Patent No. 4502784 and paragraphs [0060] to [0071] of Japanese Unexamined Patent Application Publication No. 2009-237362; thermal polymerization inhibitors disclosed in paragraph [0018] of Japanese Patent No. 4502784; and other additives disclosed in paragraphs [0058] to [0071] of Japanese Unexamined Patent Application Publication No. 2000-310706. Although the curable composition may contain a binder, the curable composition preferably contains substantially no binder. Any binder binder may be used without departing from the spirit of the present invention. Any suitable binder may be selected from known binders, preferably alkali-soluble polymeric compounds. Examples of alkali-soluble polymeric compounds that may be used include polymers disclosed in paragraph [0025] of Japanese Unexamined Patent Application Publication No. 2011-95716 and paragraphs [0033] to [0052] of Japanese Unexamined Patent Application Publication No. 2010-237589.

The concentration of a surfactant present in the curable composition is preferably 0.01% to 10% by mass based on the total solid content of the curable composition.

Solvent

Examples of solvents that may be used for coating in the manufacture of a curable composition layer include

those disclosed in paragraphs [0043] and [0044] of Japanese Unexamined Patent Application Publication No. 2011-95716.

Use

The curable composition according to the present invention is preferably a curable composition for forming a cured layer having a thickness of 0.1 to less than 5 μm, more preferably a curable composition for forming a cured layer having a thickness of 0.7 to 4 μm, even more preferably a curable composition for forming a cured layer having a thickness of 1 to 3 μm.

A cured layer having a thickness greater than the above lower limit is preferred to reduce a decrease in the surface strength of a strengthened glass due to the formation of a transparent conductive layer. A cured layer having a thickness smaller than the above upper limit is preferred to reduce the thermal contraction of the compound having an organic group and a siloxane bond and thereby reduce a decrease in the surface strength of a strengthened glass due to strain resulting from the thermal contraction of the compound having an organic group and a siloxane bond. Such a cured layer is also preferred to reduce the swelling of the cured layer with organic solvents, such as PGMEA, used in etching resists for the etching of transparent conductive layers and thereby achieve improved organic solvent resistance.

Although the curable composition according to the present invention may be used in a front panel and sensor assembly to cover a step between a decorative layer, which is typically frame-shaped around an image display region, and a glass, it is not necessary to cover the step between the decorative layer and the glass. To reduce a decrease in the surface strength of a strengthened glass due to the formation of a transparent conductive layer and to achieve improved organic solvent resistance, it is preferred to form a curable composition layer having a thickness similar to the above preferred range of thickness of the cured layer at the time when the curable composition layer is used on a transfer film, rather than to form a curable composition layer having a thickness similar to a height sufficient to cover the step between the decorative layer and the glass.

Transfer Film

A transfer film according to the present invention includes a temporary support and a curable composition layer containing a curable composition according to the present invention.

The transfer film according to the present invention may have a thermoplastic resin layer between the temporary support and the curable composition layer.

Fig. 10 shows a schematic view showing a cross-section of an example transfer film according to the present invention. A transfer film 30 shown in Fig. 10 has a multilayer structure including, in sequence, a temporary support 26, a thermoplastic resin layer 27, an interlayer 28, a curable composition layer 25 containing a curable composition according to the present invention, and a protective release layer (protective film) 29.

A transfer film according to a preferred embodiment will now be described together with preferred examples of the individual layers.

Temporary Support

The temporary support may be formed of a flexible material that does not undergo significant deformation, contraction, or elongation while being pressed or pressed and heated. Examples of such temporary supports include polyethylene terephthalate films, triacetylcellulose films, polystyrene films, and polycarbonate films. In particular, biaxially stretched polyethylene terephthalate films are preferred.

The temporary support may have any thickness, typically 5 to 200 μm. In particular, a thickness of 10 to 150 μm is preferred for reasons of, for example, ease of handling and versatility.

The temporary support may be transparent or may contain materials such as silicon oxide, alumina sol, chromium salts, and zirconium salts.

The temporary support may be made conductive by a technique such as that disclosed in Japanese Unexamined Patent Application Publication No. 2005-221726.

Curable Composition Layer

The transfer film according to the present invention includes a curable composition layer containing a curable composition according to the present invention.

The curable composition layer preferably has a viscosity in the range of 1 to 50,000 Pa·sec as measured at 100°C.

The viscosity of each layer may be measured as follows. A measurement sample is prepared by drying a curable composition or a thermoplastic resin layer coating solution under atmospheric pressure and reduced pressure

to remove any solvent. Viscosity may then be measured, for example, with a measuring instrument such as VIBRON (Model DD-III, available from Toyo Baldwin) at a measurement start temperature of 50°C, a measurement end temperature of 150°C, a heating rate of 5°C/min, and a frequency of 1 Hz/deg. The value measured at 100°C may be used.

Thermoplastic Resin Layer

The transfer film preferably has a thermoplastic resin layer between the temporary support and the curable composition layer. The thermoplastic resin layer is preferably alkali-soluble. The thermoplastic resin layer functions as a cushioning material so that it can accommodate irregularities in the underlying surface (including those due to, for example, images that have been formed thereon). The thermoplastic resin layer preferably has the property of conforming to irregularities in the target surface.

In a preferred embodiment, the thermoplastic resin layer contains, as a constituent, an organic polymeric material disclosed in Japanese Unexamined Patent Application Publication No. 5-72724. In a more preferred embodiment, the thermoplastic resin layer contains at least one material selected from organic polymeric materials having softening points of about 80°C or lower as measured by the Vicat method (specifically, by the polymer softening point measurement method in accordance with American Society for Testing and Materials ASTM D1235).

Specific examples of organic polymers include polyolefins such as polyethylene and polypropylene; ethylene copolymers such as ethylene-vinyl acetate copolymers and saponified products thereof; ethylene-acrylate copolymers and saponified products thereof; polyvinyl chloride; vinyl chloride copolymers such as vinyl chloride-vinyl acetate copolymers and saponified products thereof; polyvinylidene chloride; vinylidene chloride copolymers; polystyrene; styrene copolymers such as styrene-(meth)acrylate copolymers and saponified products thereof; polyvinyltoluene; vinyltoluene copolymers such as vinyltoluene-(meth)acrylate copolymers and saponified products thereof; poly(meth)acrylates; (meth)acrylate copolymers such as butyl (meth)acrylate-vinyl acetate copolymers; vinyl acetate copolymers; polyamide resins such as nylons, nylon copolymers, N-alkoxymethylated nylons, and N-dimethylaminated nylons; and polyesters.

It is also preferred to add a material such as a blowing agent for strippability control to the thermoplastic resin layer. Suitable blowing agents that may be used include those disclosed in paragraphs [0020] to [0028] of Japanese Unexamined Patent Application Publication No. 2007-225939.

It is also preferred to add a surfactant to the thermoplastic resin layer. Examples of suitable surfactants that may be used include those disclosed in paragraph [0017] of Japanese

Patent No. 4502784 and paragraphs [0060] to [0071] of Japanese Unexamined Patent Application Publication No. 2009-237362.

The thermoplastic resin layer preferably has a thickness of 3 to 30 μm. A thermoplastic resin layer having a thickness of 3 μm or more offers sufficient conformability during lamination and readily completely accommodates irregularities in the underlying surface. A thermoplastic resin layer having a thickness of 30 μm or less has good process suitability since such a thermoplastic resin layer does not require much burden of drying (solvent removal) during the formation of the thermoplastic resin layer on the temporary support and does not require excessive time for the development of the thermoplastic resin layer. More preferably, the thermoplastic resin layer has a thickness of 4 to 25 μm, more preferably 5 to 20 μm.

The thermoplastic resin layer may be formed by processes such as coating with a preparation containing a thermoplastic organic polymer. The preparation used for processes such as coating may be prepared using a solvent. The solvent may be any solvent that can dissolve the polymer component that forms the thermoplastic resin layer. Examples of such solvents include methyl ethyl ketone, cyclohexanone, propylene glycol monomethyl ether acetate, n-propanol, and 2-propanol.

The thermoplastic resin layer preferably has a viscosity in the range of 1,000 to 50,000 Pa·sec as measured at 100°C.

Other Layers

The transfer film may have a suitable structure including, for example, an interlayer disposed between the curable composition layer and the thermoplastic resin layer and a protective film disposed on a surface of the curable composition layer.

The transfer film preferably includes an interlayer to prevent the mixing of constituents during coating with a plurality of layers and during storage after the coating. A preferred interlayer is an oxygen-blocking layer with an oxygen-blocking function disclosed as "separating layer" in Japanese Unexamined Patent Application Publication No. 5-72724, which improves the sensitivity during exposure and reduces the time load on the exposure system, thus improving the productivity.

Examples of suitable interlayers and protective films that may be used include those disclosed in paragraphs [0083] to [0087] and [0093] of Japanese Unexamined Patent Application Publication No. 2006-259138.

## Method for Fabricating Transfer Film

The transfer film according to the present invention may be fabricated by a method for fabricating a photosensitive transfer material disclosed in paragraphs [0094] to [0098] of Japanese Unexamined Patent Application Publication No. 2006-259138.

A preferred method for fabricating a transfer film having an interlayer includes forming a thermoplastic resin layer on a temporary support by applying and drying a preparation containing a thermoplastic organic polymer and additives (thermoplastic resin layer coating solution); forming an interlayer on the thermoplastic resin layer by applying and drying a preparation prepared by adding a resin and additives to a solvent that does not dissolve the thermoplastic resin layer (interlayer coating solution); and, in addition to the thermoplastic resin layer and the interlayer, forming a curable composition layer on the interlayer by applying and drying a curable composition according to the present invention prepared using a solvent that does not dissolve the interlayer.

## Image Display Device Front Panel

An image display device front panel according to the present invention has a strengthened glass, a transparent conductive layer formed on one side of the glass, and a cured layer disposed between the glass and the transparent conductive layer formed on the one side of the glass.

The cured layer is a cured layer formed by curing a curable composition according to the present invention or is a cured layer formed by stacking a curable composition layer of a transfer film according to the present invention on the glass and curing the curable composition.

## Structure

The structure of the image display device front panel according to the present invention will be first described with reference to the drawings.

Fig. 1 is a schematic view showing a cross-section of an example image display device front panel according to the present invention. An image display device front panel 10 in Fig. 1 has a strengthened glass 1, a transparent conductive layer 3 or 4 formed on one side of the strengthened glass 1, and a cured layer 12 disposed between the strengthened glass 1 and the transparent conductive layer 3 or 4 and has a structure in which the cured layer 12 is formed only between the strengthened glass 1 and the transparent conductive layer 3 or 4.

Fig. 2 is a schematic view showing a cross-section of another example image display device front panel according to the present invention. An image display device front panel 10 in Fig. 2 has a strengthened glass 1, a transparent conductive layer 3 or 4 formed on one side of the strengthened glass 1, and a cured layer 12 disposed between the strengthened glass 1 and the transparent conductive layer 3 or 4 and has a structure in which the cured layer 12 is formed as a continuous layer on the glass at least in the entire region where the transparent conductive layer 3 or 4 is formed (an input surface of a capacitive input device).

Such structures can reduce a decrease in the surface strength of the strengthened glass of the image display device front panel according to the present invention due to the formation of the transparent conductive layer and also have high transmittance.

## Strengthened Glass

The image display device front panel has a strengthened glass. A sensor surface of a strengthened glass on which a transparent conductive layer or a transparent electrode pattern is provided has insufficient surface strength because of a decrease in surface strength due to the formation of the transparent conductive layer. According to the present invention, a curable composition containing a compound having an organic group and a siloxane bond is used to form a cured layer between a strengthened glass and a transparent conductive layer formed on one side of the glass. This cured layer can reduce a decrease in the surface strength of the strengthened glass due to the formation of the transparent conductive layer and also has high transmittance.

The term "strengthened glass" refers to a glass with increased strength having a strengthened layer (compressive stress layer) formed in the surface thereof to induce a compressive stress.

Known methods for manufacturing a strengthened glass include physical strengthening (air-cooling strengthening), in which a strengthened layer is formed through the expansion and contraction of a glass by heating and cooling, and chemical strengthening, in which a strengthened layer is formed by replacing alkali ions in a glass with other alkali ions having a larger ionic radius.

Typically, strengthened glasses obtained by chemical strengthening, i.e., chemically strengthened glasses, are used as thin glasses such as cover glasses for touch panels. Alternatively, strengthened glasses obtained by physical

strengthening, i.e., physically strengthened glasses, may be used.

Examples of strengthened glasses used in the present invention include chemically strengthened glasses and physically strengthened glasses, mentioned above. Chemical strengthening and physical strengthening may be performed by known methods. In particular, strengthened glasses suitable for use include chemically strengthened aluminosilicate glasses and chemically strengthened soda lime glasses.

The thickness of the strengthened glass may be similar to those of cover glasses used in known touch sensors. Typically, the strengthened glass has a thickness of 0.3 to 1.5 mm, preferably 0.5 to 1.1 mm.

Examples of strengthened glasses that may be used include those disclosed in [0021] to [0023] of WO2014/030599, the content of which is herein incorporated by reference.

As shown in Fig. 4, the strengthened glass 1 may have an opening 8 in a portion thereof. A mechanical pushbutton switch may be provided in the opening 8.

Cured Layer

The image display device front panel according to the present invention has a cured layer formed by curing a curable composition according to the present invention.

Thickness

The cured layer may have a thickness of 0.1 to 10 μm. As mentioned in the "Use" section of the description of the curable composition according to the present invention, the cured layer preferably has a thickness of 0.1 to less than 5 μm, more preferably 0.7 to 4 μm, even more preferably 1 to 3 μm .

Transparent Conductive Layer

The image display device front panel according to the present invention has a transparent conductive layer formed on one side of the glass.

The transparent conductive layer may be formed as a continuous layer or may be formed as a transparent electrode pattern for use as a sensor in a capacitive input device such as a touch panel. A transparent conductive layer formed as a continuous layer is subjected to a known process such as photolithography for use as a transparent electrode pattern that forms part or all of an electrode pattern in a front panel and sensor assembly.

Transparent Electrode Pattern

A front panel and sensor assembly according to the present invention, described later, preferably has a transparent electrode pattern formed from a transparent conductive layer.

In the front panel and sensor assembly, the electrode pattern may be provided as first and second electrode patterns in two substantially orthogonal directions, i.e., row and column directions (see, for example, Fig. 3). For example, in the structure in Fig. 3, the transparent electrode pattern formed from the transparent conductive layer of the image display device front panel according to the present invention may be the second electrode pattern 4 or the first electrode pattern 3.

The first and second electrode patterns 3 and 4 will now be described with reference to Fig. 3. Fig. 3 is an illustration showing example first and second electrode patterns. As shown in Fig. 3, the first electrode pattern 3 is composed of pads 3a arranged in a first direction (direction indicated by the arrow C in Fig. 3) with connections 3b therebetween. The second electrode pattern 4 is electrically insulated from the first electrode pattern 3 by an insulating layer 5 and is composed of pads arranged in a second direction (direction indicated by the arrow D in Fig. 3) crossing the first direction. When the first electrode pattern 3 is formed, the pads 3a and the connections 3b may be formed together. Alternatively, the connections 3b may be formed alone, and the pads 3a and the second electrode pattern 4 may be formed (patterned) together. If the pads 3a and the second electrode pattern 4 are formed (patterned) together, as shown in Fig. 3, the individual layers are formed such that portions of the connections 3b are connected to portions of the pads 3a and that the first and second electrode patterns 3 and 4 are electrically insulated from each other by the insulating layer 5.

The front panel and sensor assembly preferably includes a non-pattern region where no electrode pattern is formed. As used herein, the term "non-pattern region" refers to a region where no electrode pattern is formed.

Although the electrode pattern may have an end of any shape, the electrode pattern may have a tapered end. For example, the electrode pattern may have an end tapered such that the surface facing the strengthened glass is wider than the surface facing away from the strengthened glass.

If the electrode pattern has a tapered end, the angle of the end of the electrode pattern (hereinafter also referred

to as "taper angle") is preferably 30° or less, more preferably 0.1° to 15°, even more preferably 0.5° to 5°.

The taper angle as used herein may be determined by capturing a micrograph of the end of the electrode pattern and directly measuring the taper angle of a triangle approximating the tapered portion in the micrograph.

The triangle approximating the tapered portion preferably has a lower base of 10 to 3,000 nm, more preferably 100 to 1,500 nm, even more preferably 300 to 1,000 nm.

The preferred range of height of the triangle approximating the tapered portion is similar to the preferred range of thickness of the electrode pattern.

The first electrode pattern may be either a transparent electrode pattern or a nontransparent electrode pattern, preferably a transparent electrode pattern.

The second electrode pattern may be either a transparent electrode pattern or a nontransparent electrode pattern, preferably a transparent electrode pattern.

Method for Manufacturing Image Display Device Front Panel

Although the image display device front panel according to the present invention may be manufactured by any method, the front panel is preferably manufactured by the following method.

A preferred method for manufacturing an image display device front panel includes the steps of:

forming a layer of a curable composition according to the present invention on a strengthened glass or stacking a curable composition layer of a transfer film according to the present invention on a strengthened glass to form a layer of the curable composition;
curing the curable composition to form a cured layer; and
forming a transparent conductive layer on the cured layer.

Layer Formation

The method for manufacturing an image display device front panel according to the present invention includes a step of forming a layer of a curable composition according to the present invention on a strengthened glass or a step of stacking a curable composition layer of a transfer film according to the present invention on a strengthened glass to form a layer of the curable composition.

The cured layer may be formed by any process. Example processes that may be used include coating (including printing) and vapor deposition.

The layer-forming step of the method for manufacturing an image display device front panel according to the present invention is preferably a step of applying a curable composition to a strengthened glass or a step of stacking a curable composition layer of a transfer film according to the present invention on a strengthened glass to form a layer of the curable composition. Such steps have a lower manufacturing cost than vapor deposition. The step of stacking a curable composition layer of a transfer film on a strengthened glass to form a layer of the curable composition is preferably a step of stacking a curable composition layer of a transfer film obtained by a step of applying a curable composition to a temporary support on a strengthened glass to form a layer of the curable composition.

The cured layer is preferably formed by a process such as coating using, as a coating solution, a curable composition according to the present invention containing a compound having an organic group and a siloxane bond and other additives. The curable composition used for processes such as coating may be prepared using a solvent.

The cured layer may be formed by any coating process, such as screen printing.

Curing

The method for manufacturing an image display device front panel according to the present invention includes a step of curing the curable composition to form a cured layer.

The curing step of the method for manufacturing an image display device front panel according to the present invention is preferably a step of heating the curable composition at 200°C or higher on the strengthened glass. During this heat treatment, the compound having an organic group and a siloxane bond can be cured without coloration due to heat.

The heat treatment temperature is preferably 200°C to 300°C, more preferably 220°C to 260°C.

The heat treatment time is preferably 10 to 150 minutes, more preferably 20 to 100 minutes.

The heat treatment may be performed in an air environment or in a nitrogen-purged environment. An air environment is preferred since no special pressure-reducing system is used and the manufacturing cost can be reduced.

Formation of Transparent Conductive Layer

The method for manufacturing an image display device front panel according to the present invention includes a step of forming a transparent conductive layer on the cured layer.

The transparent conductive layer preferably has a refractive index of 1.75 to 2.1.

The transparent conductive layer may be formed of any material, and known materials may be used. For example, the transparent conductive layer may be an optically transparent conductive metal oxide layer such as an indium tin oxide (ITO) or indium zinc oxide (IZO) layer. Examples of such metal layers include ITO layers; metal layers such as Al, Zn, Cu, Fe, Ni, Cr, and Mo layers; and metal oxide layers such as $SiO_2$ layers. These elements may have a thickness of 10 to 200 nm. Preferably, an amorphous ITO layer is transformed into a polycrystalline ITO layer by firing to achieve reduced electrical resistance. In particular, the transparent conductive layer is preferably an ITO layer.

The transparent conductive layer, such as an ITO layer, may be formed by known processes such as sputtering and vapor deposition. Alternatively, the first electrode pattern 3, the second electrode pattern 4, and routing lines 6, described later, may be manufactured using a photosensitive film having a photocurable resin layer containing conductive fibers. As another example, if a material such as ITO is used to form elements such as the first electrode pattern, reference may be made to, for example, paragraphs [0014] to [0016] of Japanese Patent No. 4506785.

Formation of Transparent Electrode Pattern

A transparent electrode pattern that forms part or all of an electrode pattern in a front panel and sensor assembly is preferably formed from a transparent conductive layer. The transparent electrode pattern may be formed from a transparent conductive layer by any process. The transparent electrode pattern may be formed from a transparent conductive layer by a known process such as photolithography. If the transparent electrode pattern is formed from a transparent conductive layer by photolithography, it is preferred to provide an etching resist and perform mask exposure and development, i.e., etching.

If the transparent electrode pattern is formed by etching, a transparent electrode layer such as an ITO layer is preferably formed on the cured layer by a process such as sputtering. Preferably, an etching pattern is then formed on the transparent electrode layer by exposure and development using a transfer film similar to the transfer film according to the present invention used to form the cured layer except that the transfer film has an etching photocurable resin layer as a curable resin layer. The transparent electrode layer is then etched to form a transparent electrode pattern, followed by removing the etching pattern. In this way, the transparent electrode pattern can be formed.

If a transfer film having a photocurable resin layer is used as an etching resist (etching pattern), a resist pattern may be formed as described above. Etching and resist removal may be performed by known methods such as those disclosed in paragraphs [0048] to [0054] of Japanese Unexamined Patent Application Publication No. 2010-152155.

An example etching process is wet etching, which is a commonly used process involving immersion in an etchant.

The etching resist used for wet etching preferably contains a resin and a solvent. The resin for the etching resist may be any resin, and known materials may be used. Examples of solvents for the etching resist include propylene glycol monomethyl ether acetate, propylene glycol monomethyl ether, ethyl ethoxypropionate, and cyclohexanone. Other examples of solvents that may be used for the etching resist include materials disclosed in paragraph [0104] of Japanese Unexamined Patent Application Publication No. 2010-181729. The method for manufacturing an image display device front panel according to the present invention preferably includes a step of forming a transparent electrode pattern by providing an etching resist on the transparent conductive layer and then etching the transparent conductive layer in a region where no etching resist is provided. The etching resist preferably contains at least one material selected from propylene glycol monomethyl ether acetate, propylene glycol monomethyl ether, and ethyl ethoxypropionate. Even if the etching resist contains at least one material selected from propylene glycol monomethyl ether acetate, propylene glycol monomethyl ether, and ethyl ethoxypropionate, the cured layer formed from the curable composition according to the present invention exhibits high resistance to these organic solvents; therefore, the solvent for the etching resist preferably contains at least one material selected from propylene glycol monomethyl ether acetate, propylene glycol monomethyl ether, and ethyl ethoxypropionate.

The etchant used for wet etching may be any suitable acidic or alkaline etchant selected depending on the etching target. Examples of acidic etchants include simple aqueous solutions of acidic components such as hydrochloric acid, sulfuric acid, hydrofluoric acid, and phosphoric acid and mixtures thereof with salts such as ferric chloride, ammonium fluoride, and potassium permanganate. These acidic components may be used in combination. Examples of alkaline etchants include simple aqueous solutions of alkaline components such as sodium hydroxide, potassium hydroxide, ammonia, organic amines, and organic amine salts such as tetramethylammonium hydroxide and mixtures thereof with salts such as potassium permanganate. These alkaline components may be used in combination.

The etchant temperature is preferably, but not limited to, 45°C or lower. The etching photocurable resin layer used as the etching resist (also referred to as "etching mask", "etching pattern", or "resin pattern") exhibits particularly

good resistance to acidic and alkaline etchants in such a temperature range. This prevents the resin pattern from peeling during the etching step and thus allows the area where no resin pattern is present to be selectively etched.

Optionally, etching may be followed by cleaning and drying steps to prevent line contamination. For example, in the cleaning step, the substrate may be cleaned with pure water at room temperature for 10 to 300 seconds. In the drying step, air blowing may be performed at an appropriate air blow pressure (about 0.1 to 5 kg/cm$^2$).

The resin pattern may be stripped in any manner, including the immersion of the substrate in a stripping solution at 30°C to 80°C, preferably 50°C to 80°C, with stirring for 5 to 30 minutes. The resin pattern used as the etching resist, which preferably exhibits good chemical resistance at 45°C or lower, also exhibits the property of swelling with an alkaline stripping solution at a chemical temperature of 50°C or higher. This property has the advantage of reducing the process time needed for the stripping step with a stripping solution at 50°C to 80°C and leaving less residue after the stripping of the resin pattern. Thus, the difference in chemical temperature between the etching step and the stripping step allows the resin pattern used as the etching resist in the present invention to exhibit good chemical resistance in the etching step while exhibiting good strippability in the stripping step. This satisfies two contradictory properties, i.e., chemical resistance and strippability.

Examples of stripping solutions include solutions of inorganic alkaline components such as sodium hydroxide and potassium hydroxide and organic alkaline components such as tertiary amines and quaternary ammonium salts in solvents such as water, dimethyl sulfoxide, N-methylpyrrolidone, and mixtures thereof. The resin pattern may be stripped with the stripping solution by processes such as spray stripping, shower stripping, and puddle stripping.

Front Panel and Sensor Assembly

A front panel and sensor assembly according to the present invention has an image display device front panel according to the present invention and a sensor including at least an electrode pattern.

The front panel and sensor assembly is preferably a capacitive input device.

A front panel and sensor assembly according to a preferred embodiment of the present invention will now be described in detail.

Structure of Front Panel and Sensor Assembly

A preferred structure of the front panel and sensor assembly according to the present invention will be first described together with the methods for manufacturing various members that form the device.

The side of the strengthened glass 1 on which various elements are disposed is referred to as "noncontact side". A user provides an input to the front panel and sensor assembly according to the present invention, for example, by touching the contact surface (surface opposite the noncontact surface) of the strengthened glass 1 with a finger.

Figs. 4 to 8 show example structures formed during the manufacture of the front panel and sensor assembly according to the present invention. Fig. 4 is a top view showing an example strengthened glass 1 having an opening 8 formed therein. Fig. 5 is a top view showing an example image display device front panel on which a decorative layer 2 is formed.

Figs. 6 to 8 show example structures of the front panel and sensor assembly. Fig. 6 is a top view showing an example front panel and sensor assembly in which the first electrode pattern 3 is formed. Fig. 7 is a top view showing an example front panel and sensor assembly in which the first electrode pattern 3 and the second electrode pattern 4 are formed. Fig. 8 is a top view showing an example front panel and sensor assembly in which the first and second electrode patterns and the routing lines 6 are formed. These drawings illustrate the example structure described below and should not be construed as limiting the scope of the present invention.

The use of a transfer film allows a coloring composition layer, for forming a decorative layer, of the transfer film to be laminated across the boundary between the routing lines 6, which require a certain thickness, and an overcoat layer without leaving bubbles at the boundary of the mask portion through a simple process requiring no expensive equipment such as a vacuum laminator.

The decorative layer is preferably a frame-shaped decorative layer. Specifically, if the front panel and sensor assembly is used in an image display device, the decorative layer is preferably frame-shaped around the central image display portion (electronic equipment display window). A preferred example of the decorative layer is one similar to a frame-shaped light-shielding layer disclosed in Japanese Patent No. 5020580.

The routing lines 6 are electrically connected to at least one of the first and second electrode patterns 3 and 4. Preferably, the routing lines 6 are elements different from the first and second electrode patterns 3 and 4.

The routing lines are preferably frame-shaped. Specifically, if the front panel and sensor assembly is used in an image display device, the routing lines are preferably frame-shaped around the central image display portion.

A light-shielding conductive layer is preferably frame-shaped. Specifically, if the front panel and sensor assembly is used in an image display device, the light-shielding conductive layer is preferably frame-shaped around the central

image display portion.
The overcoat layer may be formed over only some of the various elements.
The overcoat layer is preferably continuously formed over the electrode pattern and the non-pattern region where no electrode pattern is formed, either directly or with another layer therebetween.
As used herein, the term "continuously" means that the overcoat layer is a continuous layer, rather than a patterned layer. That is, the overcoat layer preferably has no opening so that the electrode pattern is less visible.
The overcoat layer is preferably directly formed over the electrode pattern and the non-pattern region, rather than with another layer therebetween. If the overcoat layer is formed over the electrode pattern and the non-pattern region with another layer therebetween, the other layer may be, for example, a light-shielding conductive layer if the front panel and sensor assembly includes a light-shielding conductive layer.

Routing Lines

The routing lines are preferably routing lines for the electrode pattern and are conductive elements different from the electrode pattern. The routing lines may be conductive elements different from the light-shielding conductive layer, described later, or may be the same member as the light-shielding conductive layer, described later.
The routing lines may be formed of any material, and known materials may be used. Whereas a Mo/Al/Mo three-layer structure (MAM) has been commonly used as a material for routing lines because of its high conductivity and ease of microfabrication, it is preferred to use the same materials as mentioned above for the electrode pattern. Other metals may also be used, including gold (Au), silver (Ag), copper (Cu), aluminum (Al), molybdenum (Mo), palladium (Pd), platinum (Pt), carbon (C), and iron (Fe). Conductive pastes and inks containing these metals can be deposited by a wet process to form the routing lines at a lower cost than vapor deposition. The routing lines are preferably formed of a metal, more preferably copper or aluminum.

Decorative Layer

The image display device front panel according to the present invention may have a decorative layer.
The decorative layer is preferably formed in a frame-like (picture-frame-like) pattern on a portion of the image display device front panel.
The decorative layer 2 is formed in a picture-frame-like pattern around the display region on the noncontact side of the image display device front panel (e.g., a touch panel front panel). The decorative layer 2 is preferably formed so that elements such as the routing lines are not visible.
As shown in Figs. 5 to 8, the decorative layer 2 of the image display device front panel is preferably disposed over a region of the strengthened glass 1 (in Figs. 5 to 8, the region other than the input surface).
The decorative layer is provided as a black picture frame around the region that is to be touched, for example, with a finger or a touch pen, so that the routing lines for the electrode pattern are not visible from the contact side or for decorative purposes. Preferably, the decorative layer, such as a black or white decorative layer, is provided as a picture frame around the region that is to be touched, for example, with a finger or a touch pen, for decorative purposes.
The decorative layer may be formed by any method. Preferably, the decorative layer is formed using a transfer film having, in sequence, a temporary support and a resin layer, more preferably using a photosensitive transfer film having, in sequence, a temporary support and a photocurable resin layer, even more preferably using a photosensitive transfer film having, in sequence, a temporary support, a thermoplastic resin layer, and a photocurable resin layer. For example, if a black decorative layer is formed, the decorative layer is preferably formed using a photosensitive transfer film having a black photocurable resin layer as a photocurable resin layer by transferring the black photocurable resin layer to a surface of the strengthened glass.
If a transfer film is used to form the decorative layer, a colorant may be used in the resin layer. Examples of suitable colorants that may be used include the colorants mentioned above (e.g., organic pigments, inorganic pigments, and dyes).
If a transfer film is used to form the elements, such as the decorative layer 2, of the front panel and sensor assembly having the structure shown in Fig. 2 and the opening 8, no resist component leaks from an opening in the strengthened glass (front panel) if the strengthened glass has an opening. In particular, if a transfer film is used to form a decorative layer that needs to be formed as a light-shielding pattern extending to the boundaries of the strengthened glass, no resist component flows (leaks) from the edges of the strengthened glass. This allows a touch panel having the merit of being thin and lightweight to be manufactured by a simple process without the contamination of the backside of the strengthened glass.
The decorative layer may be formed using a transfer film by a method disclosed in [0083] to [0116] of Japanese Unexamined Patent Application Publication No. 2014-160460, the content of which is herein incorporated by reference.

Light-Shielding Conductive Layer

The light-shielding conductive layer may be a layer of a material such as a metal with high conductivity and good light-shielding performance or an alloy or compound thereof. The light-shielding conductive layer may be formed by processes such as vacuum vapor deposition, sputtering, ion plating, and metal plating. Preferably, there is an etchant that does not etch the electrode pattern but etches the light-shielding conductive layer itself. Preferred examples of such metals include aluminum, nickel, copper, silver, and tin. Copper foils having thicknesses of 20 to 1,000 nm are particularly preferred since such metal layers provide good conductivity and light-shielding performance and can be easily etched with aqueous hydrogen peroxide in an acidic atmosphere in which the electrode pattern is not etched. More preferably, the light-shielding conductive layer has a thickness of 30 nm or more, even more preferably 100 to 500 nm. A light-shielding conductive layer having a thickness of 100 nm or more provides high conductivity, whereas a light-shielding conductive layer having a thickness of 500 nm or less is easy to handle and has good workability.

Overcoat Layer

The overcoat layer is preferably formed on the transparent electrode pattern by transfer.
The flexible wiring formed on the sensor, including the electrode pattern and the routing lines, can be directly connected to terminal portions 31 for the routing lines so that signals can be transmitted from the sensor to an electrical circuit.
The overcoat layer may be photocurable or thermosetting and photocurable. In particular, a thermosetting and photocurable transparent resin layer is preferred since such an overcoat layer can be easily formed by photocuring after transfer and can then be thermally cured to achieve a higher layer reliability.
The overcoat layer may be the same layer as the protective layer disclosed in [0024] to [0036] of Japanese Unexamined Patent Application Publication No. 2014-178922.

Image Display Device

An image display device according to the present invention includes, as a component, a front panel and sensor assembly according to the present invention.
The image display device including, as a component, the front panel and sensor assembly according to the present invention may be configured as disclosed in, for example, "Saishin Tacchi Paneru Gijutu (Latest Touch Panel Technology)" (issued on July 6, 2009, Techno-Times, Co., Ltd.); Yuji Mitani, "Tacchi Paneru No Gijutu To Kaihatu (Touch Panel Technology and Development)", CMC Publishing Co., Ltd. (December 2004); FPD International 2009 Forum T-11 lecture textbook; and Cypress Semiconductor Corporation Application Note AN2292.

Examples

The present invention is further illustrated by the following examples.
The types, amounts, and ratios of materials used, the types and sequences of steps, and other details of the following examples may be changed without departing from the spirit of the invention. Thus, the following examples should not be construed as limiting the scope of the invention. Parts and percentages are by mass unless otherwise specified.

Example 1

Preparation of Curable Composition 1

Silicone resins, serving as compounds having an organic group and a siloxane bond, a surfactant, a curing catalyst, and solvents were weighed out and added in the above order at a temperature of 25°C (±2°C) so that the mixture had the following composition. The mixture was stirred at a temperature of 24°C (±2°C) and 150 rounds per minute (rpm) for 30 minutes to obtain Curable Composition 1. Curable Composition 1 thus obtained was used as a curable composition of Example 1.
Table 1 below shows the composition of Curable Composition 1. The amounts shown in Table 1 are expressed in parts by mass.

- Silicone resin: KR-300 (available from Shin-Etsu Chemical Co., Ltd.; solution of straight silicone in xylene (solid content = 50% by mass)): 300 parts by mass
- Silicone resin: KR-311 (available from Shin-Etsu Chemical Co., Ltd.; solution of straight silicone in xylene (solid

content = 60% by mass)): 250 parts by mass

- Zn curing catalyst for silicone resin: D-15 (available from Shin-Etsu Chemical Co., Ltd.; solution in xylene (solid content = 25% by mass)): 12.0 parts by mass
- Surfactant: Structure 1 below: 10.0 parts by mass
- Xylene: 218 parts by mass
- Methyl ethyl ketone: 210 parts by mass

[Chem. 5]

Structure 1

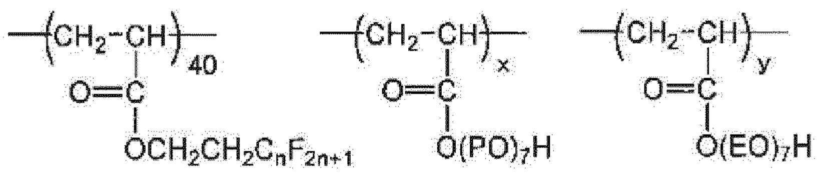

(n = 6, X = 55, y = 5,
Mw = 33,940, Mw/Mn = 2.55,
PO: propylene oxide, EO: ethylene oxide)

Formation of Cured Layer 1

Layer Formation

Curable Composition Layer 1 was then formed by forming a layer of Curable Composition 1 by spin coating on a 150 mm × 150 mm × 0.55 mm thick Gorilla Glass 3 (available from Corning Incorporated, 40 μm thick stress layer, compressive stress = 810 MPa), which had been chemically strengthened, and then volatilizing any volatile component at 100°C for 3 minutes.

Curing

After cooling, Curable Composition Layer 1 was cured by heat treatment (post-baking) at 240°C for 30 minutes to form Cured Layer 1 with a thickness of 2 μm on the strengthened glass.

Transmittance Evaluation

The transmittance of Cured Layer 1 formed as described above relative to that of a strengthened glass having no cured layer thereon, serving as a blank, was determined using an OSP-SP200 microspectrophotometer available from Olympus Corporation. The transmittance at 400 nm, at which the decrease in transmittance due to thermal coloration is maximized, was evaluated on the following evaluation scale. The results are summarized in Table 2 below. For transmittance, larger values are preferred. A, B, and C are acceptable for practical use.

Evaluation Scale

A: 98% or more
B: 95% to less than 98%
C: 90% to less than 95%
D: 85% to less than 90%
E: less than 85%

Surface Strength Evaluation

An ITO layer having a thickness of 100 nm was then deposited by sputtering on the front surface of Cured Layer 1 on the resulting strengthened glass having Cured Layer 1 to obtain an image display device front panel having a transparent conductive layer.

The resulting sample was tested for the surface strength of the glass using an AGS-X (available from Shimadzu Corporation). A strength measurement system shown in Fig. 9 was used that included a support S having a ring-shaped protrusion (with a diameter of 15 cm) and a load unit L having a ring-shaped contact portion (with a diameter of 5 cm). The image display device front panel 10 having the transparent conductive layer was placed on the ring of the support S, with the ITO-deposited surface facing the support S, such that the center of the ring of the support S coincided with the center of the front panel 10. The load unit L was then pressed against the front panel 10 to place a load thereon such that the center of the ring of the support S was aligned with the center of the ring-shaped contact portion of the load unit L. The surface strength of the image display device front panel having the transparent conductive layer was determined from the load at which the strengthened glass fractured.

The results are summarized in Table 2 below. Larger values are preferred. A, B, and C are acceptable for practical use.

A: 500 MPa or more
B: 400 to less than 500 MPa
C: 300 to less than 400 MPa
D: 200 to less than 300 MPa
E: less than 200 MPa

Organic Solvent (PGMEA) Resistance Evaluation

The strengthened glass having Cured Layer 1 was introduced into a vacuum chamber. An ITO transparent conductive layer having a thickness of 40 nm was formed on Cured Layer 1 by DC magnetron sputtering (at a substrate temperature of 250°C, an argon pressure of 0.13 Pa, and an oxygen pressure of 0.01 Pa) using an ITO target (indium:tin = 95:5 (molar ratio)) having a $SnO_2$ content of 10% by mass to obtain an image display device front panel having a transparent conductive layer. The ITO transparent conductive layer had a surface electrical resistance of 80 Ω/sq.

Droplets of propylene glycol monomethyl ether acetate (PGMEA, available from Wako Pure Chemical Industries, Ltd.) at 25°C were deposited on the transparent conductive layer. The transparent conductive layer was examined under a light microscope for any change in surface condition. A, B, and C are acceptable for practical use. D is not acceptable for practical use since the transparent conductive layer will crack when coated with an etching resist for patterning the transparent conductive layer.

A: No change was observed 20 minutes or more after the deposition of the droplets.
B: No change was observed 15 minutes after the deposition of the droplets, but the transparent conductive layer cracked after 20 or more.
C: No change was observed 10 minutes after the deposition of the droplets, but the transparent conductive layer cracked after 15 minutes or more.
D: The transparent conductive layer cracked within 10 minutes after the deposition of the droplets.

Skeleton Visibility Evaluation

Fabrication of Image Display Device Front Panel

An ITO layer having a thickness of 100 nm was deposited on Cured Layer 1 by sputtering as in the organic solvent resistance evaluation to obtain Image Display Device Front Panel 1 having a transparent conductive layer.

Fabrication of Front Panel and Sensor Assembly

The transparent conductive layer of Image Display Device Front Panel 1 thus obtained was then wet-etched into a striped pattern by the following method to form a transparent electrode pattern. The resulting sample was used as a sample front panel and sensor assembly for skeleton visibility evaluation.

Fabrication of Etching Photosensitive Film E1

A thermoplastic resin layer coating solution of Formulation H1 used for the transfer film of Example 14, described later, was applied to a polyethylene terephthalate film temporary support having a thickness of 75 μm through a slit nozzle and was dried. An interlayer coating solution of Formulation PI used for the transfer film of Example 14, described later, was then applied and dried. An etching photocurable resin layer coating solution of Formulation E1 below was then applied and dried. In this way, a multilayer structure composed of a thermoplastic resin layer having a dry thickness

of 15.1 μm, an interlayer having a dry thickness of 1.6 μm, and an etching photocurable resin layer having a thickness of 2.0 μm were formed on the temporary support. Finally, a protective film (12 μm thick polypropylene film) was bonded with pressure. Thus, Etching Photosensitive Film E1 was fabricated in which the temporary support, the thermoplastic resin layer, the interlayer (oxygen-blocking layer), and the etching photocurable resin layer were combined together.

Etching Photocurable Resin Layer Coating Solution: Formulation E1

· Methyl methacrylate/styrene/methacrylic acid copolymer (copolymer composition (% by mass) = 31/40/29, mass average molecular weight = 60,000, acid value = 163 mg KOH/g): 16 parts by mass
· Monomer 1 (the trade name BPE-500, available from Shin Nakamura Chemical Co., Ltd.): 5.6 parts by mass
· Adduct of hexamethylene diisocyanate with 0.5 mol of tetraethylene oxide monomethacrylate: 7 parts by mass
· Cyclohexane dimethanol monoacrylate as compound having one polymerizable group in molecule: 2.8 parts by mass
· 2-Chloro-N-butylacridone: 0.42 part by mass
· 2,2-Bis(o-chlorophenyl)-4,4',5,5'-tetraphenylbiimidazole: 2.17 parts by mass
· Malachite Green Oxalate: 0.02 part by mass
· Leuco Crystal Violet: 0.26 part by mass
· Phenothiazine: 0.013 part by mass
· Surfactant (the trade name Megaface F-780F, available from DIC Corporation): 0.03 part by mass
· Methyl ethyl ketone: 40 parts by mass
· 1-Methoxy-2-propanol: 20 parts by mass
· Propylene glycol monomethyl ether acetate: 35 parts by mass

Etching Photocurable Resin Layer Coating Solution E1 had a viscosity of 2,500 Pa·sec at 100°C after solvent removal.

Formation of Transparent Electrode Pattern

After Image Display Device Front Panel 1 was cleaned, Etching Photosensitive Film E1 from which the protective film was removed was laminated on the transparent conductive layer (at a transparent film substrate temperature of 130°C, a rubber roller temperature of 120°C, a linear pressure of 100 N/cm, and a transport speed of 2.2 m/min). After the temporary support was stripped, the laminate was subjected to pattern exposure at an exposure dose of 50 $mJ/cm^2$ (i-line). The distance between the exposure mask (quartz exposure mask having a transparent electrode pattern) and the etching photocurable resin layer was set to 200 μm.

Image Display Device Front Panel 1 subjected to exposure was then developed with a triethanolamine developer (10 times dilution of the trade name T-PD2 (available from Fujifilm Corporation, triethanolamine content = 30% by mass) with pure water) at 25°C for 100 seconds. Image Display Device Front Panel 1 was then cleaned with a surfactant-containing cleaning solution (10 times dilution of the trade name T-SD3 (available from Fujifilm Corporation) with pure water) at 33°C for 20 seconds. Any residue was removed with a rotating brush by ejecting ultrapure water from an ultrahigh-pressure cleaning nozzle. Post-baking was then performed at 130°C for 30 minutes to form an etching photocurable resin layer pattern on the transparent electrode layer of Image Display Device Front Panel 1.

After the formation of the etching photocurable resin layer pattern on the transparent conductive layer, Image Display Device Front Panel 1 was immersed in an etching bath containing an ITO etchant (aqueous solution of hydrochloric acid and potassium chloride at a liquid temperature of 30°C) for 100 seconds to dissolve and remove the bare region of the transparent electrode layer not covered by the etching photocurable resin layer. A transparent electrode pattern with an etching photocurable resin layer pattern was thus formed on Image Display Device Front Panel 1.

Image Display Device Front Panel 1 having the transparent electrode pattern with the etching photocurable resin layer pattern was then immersed in a resist stripping bath containing a resist stripping solution (N-methyl-2-pyrrolidone, monoethanolamine, and a surfactant (the trade name Surfynol 465, available from Air Products And Chemicals, Inc.) at a liquid temperature of 45°C) for 200 seconds to remove the etching photocurable resin layer. Front Panel and Sensor Assembly 1 having a transparent electrode pattern formed on Image Display Device Front Panel 1 was thus obtained.

Skeleton Visibility Evaluation of Front Panel and Sensor Assembly

Front Panel and Sensor Assembly 1 was placed on a black fabric and was visually evaluated for whether the transparent electrode pattern was visible on the following scale. A and B are acceptable for practical use.

A: The transparent electrode pattern was not visible.
B: The transparent electrode pattern was slightly visible.
C: The transparent electrode pattern was clearly visible.

Examples 2 to 13 and Comparative Example 2

Curable compositions and image display device front panels of Examples 2 to 13 and Comparative Example 2 were fabricated and evaluated as in Example 1 except that the thickness was changed to those shown in Table 1 below and Curable Composition 1 was replaced with Curable Compositions 2 to 13 and C2. The cured layers obtained in Examples 2 to 13 and Comparative Example 2 are referred to as Cured Layers 2 to 13 and C2.
KR-251, which was used in Curable Compositions 2, 8, and 13, is a dimethyl silicone resin, and X-40-9246, which was used in Curable Compositions 2, 8, and 13, is an alkoxy-oligomer-modified methyl silicone resin (both available from Shin-Etsu Chemical Co., Ltd.).
KR-5230, which was used in Curable Compositions 3, 5, 11, and 12, is a polyester-modified silicone resin (both available from Shin-Etsu Chemical Co., Ltd.).
ES-1002T, which was used in Curable Composition 4, is an epoxy-modified silicone resin (available from Shin-Etsu Chemical Co., Ltd.).
KE-1820, which was used in Curable Composition 7, is a one-component silicone rubber (available from Shin-Etsu Chemical Co., Ltd.).
KR-400, which was used in Curable Composition 8, is an alkoxy-oligomer-modified methyl silicone resin (available from Shin-Etsu Chemical Co., Ltd.).
KAYARAD DPHA available from Nippon Kayaku Co., Ltd., which was used in Curable Compositions 11, 12, and C2, is a dipentaerythritol (penta/hexa)acrylate.
ACRYBASE FF187, which was used in Curable Composition C2, is a solution of a benzyl methacrylate/methacrylic acid (= 70/30 (molar ratio)) copolymer in propylene glycol monomethyl ether acetate (45%, weight average molecular weight = 30,000, available from Fujikura Kasei Co., Ltd.).
NanoUse OZ-S20M (available from Nissan Chemical Industries, Ltd.), which was used as a metal oxide in Curable Compositions 5, 6, and 8, is a zirconium oxide dispersion having a pigment concentration of 30%, a primary particle size of 10 nm, and a refractive index of 1.9.

Comparative Example 1

In Comparative Example 1, an image display device front panel of Comparative Example 1 was fabricated by directly forming an ITO layer on a strengthened glass without applying a curable composition and was evaluated.

Example 14

Fabrication of Transfer Film

A thermoplastic resin layer coating solution of Formulation H1 below was applied to a polyethylene terephthalate film temporary support having a thickness of 75 μm through a slit nozzle and was dried. An interlayer coating solution of Formulation PI below was then applied and dried. Curable Composition 1 described above, serving as a composition for forming a cured layer, was then applied and dried. In this way, a thermoplastic resin layer having a dry thickness of 15.1 μm, an interlayer having a dry thickness of 1.6 μm, and a curable composition layer having a dry thickness of 2.0 μm were formed on the temporary support. Finally, a protective film (12 μm thick polypropylene film) was bonded with pressure. Thus, a transfer film was fabricated in which the temporary support, the thermoplastic resin layer, the interlayer (oxygen-blocking layer), and the curable composition layer were combined together. This sample is referred to as "transfer film of Example 14".

Thermoplastic Resin Layer Coating Solution: Formulation H1

· Methanol: 11.1 parts by mass
· Propylene glycol monomethyl ether acetate: 6.36 parts by mass
· Methyl ethyl ketone: 52.4 parts by mass
· Methyl methacrylate/2-ethylhexyl acrylate/benzyl methacrylate/methacrylic acid copolymer (copolymer compositional ratio (molar ratio) = 55/11.7/4.5/28.8, molecular weight = 100,000, Tg ≈ 70°C): 5.83 parts by mass

· Styrene/acrylic acid copolymer (copolymer compositional ratio (molar ratio) = 63/37, weight average molecular weight = 10,000, Tg ≈ 100°C): 13.6 parts by mass
· 2,2-Bis[4-(methacryloxypolyethoxy)phenyl]propane (available from Shin Nakamura Chemical Co., Ltd.): 9.1 parts by mass
· Fluoropolymer (copolymer of 40 parts of $C_6F_{13}CH_2CH_2OCOCH=CH_2$, 55 parts of $H(OCH(CH_3)CH_2)7OCOCH=CH_2$, and 5 parts of $H(OCHCH_2)_7OCOCH=CH_2$, weight average molecular weight = 30,000, 30% by mass solution in methyl ethyl ketone, available from DIC Corporation, the trade name Megaface F780F): 0.54 part by mass

Interlayer Coating Solution: Formulation PI

· PVA205 (polyvinyl alcohol, available from Kuraray Co., Ltd., degree of saponification = 88%, degree of polymerization = 550): 32.2 parts by mass
· Polyvinylpyrrolidone (K-30, available from ISP Japan Ltd.): 14.9 parts by mass
· Distilled water: 524 parts by mass
· Methanol: 429 parts by mass

The protective film was removed from the thus-fabricated transfer film of Example 14, and the bare surface of the curable composition layer was placed on a surface of a Gorilla Glass 3, mentioned in Example 1, preheated at 90°. The transfer film and the glass were laminated together using a laminator (available from Hitachi Industries Co., Ltd. (Model Lamic II)) at a rubber roller temperature of 50°C, a linear pressure of 100 N/cm, and a transport speed of 2.2 m/min. The polyethylene terephthalate temporary support was then stripped and removed from the interface with the thermoplastic resin layer.

After the stripping of the temporary support, the thermoplastic resin layer and the interlayer were removed from the sample by shower development by ejecting a triethanolamine developer (12 times dilution of the trade name T-PD2 (available from Fujifilm Corporation, triethanolamine content = 30% by mass) with pure water (1 part of T-PD2 was mixed with 11 parts of pure water)) at 30°C at a flat nozzle pressure of 0.1 MPa for 20 seconds to obtain Curable Composition Layer 14 formed by transferring a curable composition layer. After air was blown onto the top surface of Curable Composition Layer 14 to remove any liquid, it was cleaned by showering with pure water for 10 seconds, followed by blowing air to reduce the liquid remaining on the layer. Curable Composition Layer 14 was then post-baked at 240°C for 30 minutes to form Cured Layer 14 having a thickness of 2 μm on the strengthened glass.

An image display device front panel and a front panel and sensor assembly were fabricated and evaluated as in Example 1 except for the method for fabricating the cured layer.

Fabrication of Image Display Device (Touch Panel)

The front panel and sensor assembly of each example manufactured as described above was bonded to a liquid crystal display element manufactured as disclosed in Example 1 of Japanese Unexamined Patent Application Publication No. 2009-47936, and an image display device of each example including, as a component, the front panel and sensor assembly of the same example, serving as a capacitive input device, was fabricated by a known method.

[Table 1]

| | | Example 1 | Example 2 | Example 3 | Example 4 | Example 5 | Example 6 | Example 7 | Example 8 | Example 9 | Example 10 | Example 11 | Example 12 | Example 13 | Example 14 | Comparative Example 2 |
|---|---|---|---|---|---|---|---|---|---|---|---|---|---|---|---|---|
| Curable composition | | 1 | 2 | 3 | 4 | 5 | 6 | 7 | 8 | 9 | 10 | 11 | 12 | 13 | 14 | C2 |
| Compound having organic group and siloxane bond | KR-300 | 300.0 | | | | | 126.0 | | | | 300.0 | | | | 300.0 | |
| | KR-311 | 250.0 | | | | | 105.0 | | | | 250.0 | | | | 250.0 | |
| | KR-251 | | 750.0 | | | | | | 315.0 | | | | | 750.0 | | |
| | KR-5230 | | | 500.0 | | 210.0 | | | | | | 380.0 | 430.0 | | | |
| | ES-1002T | | | | 500.0 | | | | | | | | | | | |
| | KE-1820 | | | | | | | 300.0 | | | | | | | | |
| | KR-400 | | | | | | | | | 300.0 | | | | | | |
| | X-40-9246 | | 150.0 | | | | | | 63.0 | | | | | 150.0 | | |
| Other polymerizable compound | KAYARAD DPHA from Nippon Kayaku Co., Ltd. | | | | | | | | | | | 72.0 | 42.0 | | | 120.0 |
| Binder | ACRYBASE FF187 | | | | | | | | | | | | | | | 375.0 |

(continued)

| | | Example 1 | Example 2 | Example 3 | Example 4 | Example 5 | Example 6 | Example 7 | Example 8 | Example 9 | Example 10 | Example 11 | Example 12 | Example 13 | Example 14 | Comparative Example 2 |
|---|---|---|---|---|---|---|---|---|---|---|---|---|---|---|---|---|
| Photoinitiator | 1,2-Octanedione-[4-(phenylthio)-2-(o-benzoyloxime) (Irgacure OXEOl from BASF) | | | | | | | | | | | | | | | 27.0 |
| Curing catalyst | D-15 (from Shin-Etsu Chemical Co., Ltd.) | 12.0 | 12.0 | | | | | | | 12.0 | 12.0 | 12.0 | 12.0 | 12.0 | 12.0 | |
| Surfactant | Structure 1 below | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 |
| Metal oxide | NanoUse OZ-S20M (from Nissan Chemical Industries, Ltd.) | | | | | 570.5 | 570.5 | | 570.5 | | | | | | | |

(continued)

| | | Example 1 | Example 2 | Example 3 | Example 4 | Example 5 | Example 6 | Example 7 | Example 8 | Example 9 | Example 10 | Example 11 | Example 12 | Example 13 | Example 14 | Comparative Example 2 |
|---|---|---|---|---|---|---|---|---|---|---|---|---|---|---|---|---|
| Solvent | Xylene | 218.0 | 78.0 | 280.0 | 280.0 | 570.0 | 549.0 | 480.0 | 402.0 | 468.0 | 218.0 | 316.0 | 296.0 | 78.0 | 218.0 | |
| | 1-Methoxy-2-propyl acetate | | | | | | | | | | | | | | | 258.0 |
| | Methyl ethyl ketone | 210.0 | | 210.0 | 210.0 | 210.0 | 210.0 | 210.0 | 210.0 | 210.0 | 210.0 | 210.0 | 210.0 | | 210.0 | 210.0 |
| Content of compound having organic group and siloxane bond (based on solid content excluding metal oxide) | | 98.0% | 98.3% | 99.0% | 99.0% | 97.7% | 97.7% | 99.0% | 97.9% | 98.0% | 98.0% | 74.5% | 84.3% | 98.3% | 98.0% | 0.0% |
| Thickness (μm) | | 1.5 | 0.5 | 2.0 | 1.9 | 2.0 | 2.0 | 2.2 | 2.0 | 2.1 | 4.5 | 1.4 | 1.5 | 5.6 | 2.0 | 2.0 |

[Table 2]

| | Example 1 | Example 2 | Example 3 | Example 4 | Example 5 | Example 6 | Example 7 | Example 8 | Example 9 | Example 10 | Example 11 | Example 12 | Example 13 | Example 14 | Comparative Example 1 | Comparative Example 2 |
|---|---|---|---|---|---|---|---|---|---|---|---|---|---|---|---|---|
| Layer formed on strengthened glass | Cured Layer 1 | Cured Layer 2 | Cured Layer 3 | Cured Layer 4 | Cured Layer 5 | Cured Layer 6 | Cured Layer 7 | Cured Layer 8 | Cured Layer 9 | Cured Layer 10 | Cured Layer 11 | Cured Layer 12 | Cured Layer 13 | Cured Layer 14 | None | Cured Layer C2 |
| Transmittance | A | A | A | B | A | A | B | A | A | A | C | B | B | A | A | E |
| Surface strength | A | B | A | A | A | A | A | A | A | B | A | A | C | A | E | A |
| Organic solvent (PGMEA) resistance | B | B | A | A | A | B | B | B | B | B | A | A | C | B | A | A |
| Skeleton visibility | B | B | B | B | A | A | B | A | B | B | B | B | B | B | B | B |

As shown in Table 2 above, the image display device front panels of the Examples, in which the curable compositions of the Examples were used, were suitable for use as image display device front panels since the cured layer was capable of reducing a decrease in the surface strength of the strengthened glass due to the formation of the transparent conductive layer (vapor deposition of ITO) and also had high transmittance.

In contrast, the image display device front panel of Comparative Example 1, in which no cured layer was formed between the strengthened glass and the transparent conductive layer formed on one side of the glass, was not acceptable for image display device applications since the surface strength of the strengthened glass decreased due to the formation of the transparent conductive layer (vapor deposition of ITO).

The image display device front panel of Comparative Example 2, in which a cured layer was formed using an acrylic polymerizable compound used in WO2014/030599, rather than using a compound having an organic group and a siloxane bond, was colored due to heat, and the transmittance decreased to a level that was not acceptable for image display device applications.

The front panel and sensor assemblies of the Examples were also preferred in that the display screen was bright as viewed through the front panel. In contrast, the display screen of the front panel and sensor assembly of Comparative Example 2 was colored.

Reference Signs List

| | |
|---|---|
| 1 | strengthened glass |
| 2 | decorative layer |
| 3 | transparent conductive layer (electrode pattern, first electrode pattern) |
| 3a | pad |
| 3b | connection |
| 4 | transparent conductive layer (electrode pattern, second electrode pattern) |
| 5 | insulating layer |
| 6 | routing line (different conductive element) |
| 8 | opening |
| 10 | image display device front panel |
| 12 | cured layer |
| 25 | curable composition layer |
| 26 | temporary support |
| 27 | thermoplastic resin layer |
| 28 | interlayer |
| 29 | protective release layer (protective film) |
| 30 | transfer film |
| C | first direction |
| D | second direction |
| L | load unit |
| S | support |

## Claims

**1.** An image display device front panel comprising:

a strengthened glass;
a transparent conductive layer formed on one side of the glass; and
a cured layer disposed between the glass and the transparent conductive layer formed on the one side of the glass,
wherein the cured layer is a cured layer formed by curing a curable composition, the curable composition comprising a compound having an organic group and a siloxane bond.

**2.** The image display device front panel according to claim 1, wherein the cured layer has a thickness of 0.1 to less than 5 μm, the curable composition comprises at least an organically modified silicone as the compound having an organic group and a siloxane bond, and wherein the content of the compound having an organic group and a siloxane bond is 74.5% by mass or more based on the solid content of the curable composition excluding any metal oxide.

**3.** The image display device front panel according to claim 1, comprising at least an organically modified silicone as the compound having an organic group and a siloxane bond.

**4.** The image display device front panel according to any one of claims 1 to 3, further comprising a metal oxide.

**5.** The image display device front panel according to any one of claims 1 to 4, wherein the cured layer is formed only between the glass and the transparent conductive layer.

**6.** The image display device front panel according to any one of claims 1 to 4, wherein the cured layer is formed as a continuous layer on the glass at least in an entire region where the transparent conductive layer is formed.

**7.** A front panel and sensor assembly comprising the image display device front panel according to any one of claims 1 to 6,
wherein the transparent conductive layer is a sensor including an electrode pattern.

**8.** An image display device comprising, as a component, the front panel and sensor assembly according to claim 7.

**9.** A method for manufacturing an image display device front panel according to any of claims 1 to 6, comprising the steps of:

forming a layer of the curable composition on the strengthened glass or stacking a curable composition layer of a transfer film comprising the curable composition and a temporary support layer on the glass to form a layer of the curable composition;
curing the curable composition to form a cured layer; and
forming a transparent conductive layer on the cured layer.

**10.** The method for manufacturing an image display device front panel according to claim 9, wherein the curing step is a step of heating the curable composition at 200°C or higher on the glass.

**11.** The method for manufacturing an image display device front panel according to claim 9 or 10, further comprising a step of forming a transparent electrode pattern by providing an etching resist on the transparent conductive layer and then etching the transparent conductive layer in a region where no etching resist is provided,
wherein the etching resist contains at least one material selected from propylene glycol monomethyl ether acetate, propylene glycol monomethyl ether, and ethyl ethoxypropionate.

## Patentansprüche

**1.** Frontplatte einer Bildanzeigevorrichtung, umfassend:

ein verstärktes Glas;
eine transparente leitfähige Schicht, die auf einer Seite des Glases gebildet ist; und
eine gehärtete Schicht, die zwischen dem Glas und der transparenten leitfähigen Schicht, die auf der einen Seite des Glases gebildet ist, angeordnet ist,
wobei die gehärtete Schicht eine gehärtete Schicht ist, die durch Härten einer härtbaren Zusammensetzung gebildet wird, wobei die härtbare Zusammensetzung eine Verbindung umfasst, die eine organische Gruppe und eine Siloxanbindung aufweist.

**2.** Frontplatte einer Bildanzeigevorrichtung nach Anspruch 1, wobei die gehärtete Schicht eine Dicke von 0,1 bis weniger als 5 $\mu$m aufweist, die härtbare Zusammensetzung mindestens ein organisch modifiziertes Silicon als die Verbindung umfasst, die eine organische Gruppe und eine Siloxanbindung aufweist, und wobei der Gehalt der Verbindung, die eine organische Gruppe und eine Siloxanbindung aufweist, 74,5 Massen-% oder mehr beträgt, bezogen auf den Feststoffgehalt der härtbaren Zusammensetzung unter Ausschluss jeglichen Metalloxids.

**3.** Frontplatte einer Bildanzeigevorrichtung nach Anspruch 1, umfassend mindestens ein organisch modifiziertes Silicon als die Verbindung, die eine organische Gruppe und eine Siloxanbindung aufweist.

**4.** Frontplatte einer Bildanzeigevorrichtung nach einem der Ansprüche 1 bis 3, weiter umfassend ein Metalloxid.

5. Frontplatte einer Bildanzeigevorrichtung nach einem der Ansprüche 1 bis 4, wobei die gehärtete Schicht nur zwischen dem Glas und der transparenten leitfähigen Schicht gebildet ist.

6. Frontplatte einer Bildanzeigevorrichtung nach einem der Ansprüche 1 bis 4, wobei die gehärtete Schicht als eine durchgehende Schicht auf dem Glas zumindest in einem gesamten Bereich, in dem die transparente leitfähige Schicht gebildet ist, gebildet wird.

7. Frontplatten- und Sensoranordnung, umfassend die Frontplatte des Bildanzeigevorrichtung nach einem der Ansprüche 1 bis 6,
wobei die transparente leitfähige Schicht ein Sensor einschließlich einer Elektrodenstruktur ist.

8. Bildanzeigevorrichtung, die als eine Komponente die Frontplatte und die Sensorbaugruppe nach Anspruch 7 umfasst.

9. Verfahren zur Herstellung einer Frontplatte einer Bildanzeigevorrichtung nach einem der Ansprüche 1 bis 6, umfassend die Schritte von:

   Bilden einer Schicht der härtbaren Zusammensetzung auf dem verstärkten Glas oder Stapeln einer härtbaren Zusammensetzungsschicht eines Transferfilms, der die härtbare Zusammensetzung und eine temporäre Trägerschicht auf dem Glas umfasst, um eine Schicht der härtbaren Zusammensetzung zu bilden;
   Härten der härtbaren Zusammensetzung, um eine gehärtete Schicht zu bilden; und
   Bilden einer transparenten leitfähigen Schicht auf der gehärteten Schicht.

10. Verfahren zur Herstellung einer Frontplatte einer Bildanzeigevorrichtung nach Anspruch 9, wobei der Härtungsschritt ein Schritt des Erwärmens der härtbaren Zusammensetzung bei 200 °C oder höher auf dem Glas ist.

11. Verfahren zur Herstellung einer Frontplatte einer Bildanzeigevorrichtung nach Anspruch 9 oder 10, weiter umfassend einen Schritt des Bildens einer transparenten Elektrodenstruktur durch Bereitstellen eines Ätzresists auf der transparenten leitfähigen Schicht und dann des Ätzens der transparenten leitfähigen Schicht in einem Bereich, in dem kein Ätzresist bereitgestellt ist,
wobei das Ätzresist mindestens ein Material enthält, ausgewählt aus Propylenglykolmonomethyletheracetat, Propylenglykolmonomethylether und Ethylethoxypropio nat.

## Revendications

1. Panneau avant de dispositif d'affichage d'image comprenant :

   un verre trempé ;
   une couche conductrice transparente formée sur un côté du verre ; et
   une couche durcie disposée entre le verre et la couche conductrice transparente formée sur le un côté du verre, dans lequel la couche durcie est une couche durcie formée par durcissement d'une composition durcissable, la composition durcissable comprenant un composé présentant un groupe organique et une liaison siloxane.

2. Panneau avant de dispositif d'affichage d'image selon la revendication 1, dans lequel la couche durcie présente une épaisseur allant de 0,1 à moins de 5 $\mu$m, la composition durcissable comprend au moins une silicone modifiée organiquement comme le composé présentant un groupe organique et une liaison siloxane, et dans lequel la teneur du composé présentant un groupe organique et une liaison siloxane est supérieure ou égale à 74,5 % en masse par rapport à la teneur en matières solides de la composition durcissable à l'exclusion de tout oxyde métallique.

3. Panneau avant de dispositif d'affichage d'image selon la revendication 1, comprenant au moins une silicone modifiée organiquement comme le composé présentant un groupe organique et une liaison siloxane.

4. Panneau avant de dispositif d'affichage d'image selon l'une quelconque des revendications 1 à 3, comprenant en outre un oxyde métallique.

5. Panneau avant de dispositif d'affichage d'image selon l'une quelconque des revendications 1 à 4, dans lequel la couche durcie est formée uniquement entre le verre et la couche conductrice transparente.

6. Panneau avant de dispositif d'affichage d'image selon l'une quelconque des revendications 1 à 4, dans lequel la couche durcie est formée comme une couche continue sur le verre au moins dans une zone entière où la couche conductrice transparente est formée.

7. Panneau avant et ensemble de capteur comprenant le panneau avant de dispositif d'affichage d'image selon l'une quelconque des revendications 1 à 6,
dans lequel la couche conductrice transparente est un capteur incluant un motif d'électrode.

8. Dispositif d'affichage d'image comprenant, comme composant, le panneau avant et l'ensemble de capteur selon la revendication 7.

9. Procédé de fabrication d'un panneau avant de dispositif d'affichage d'image selon l'une quelconque des revendications 1 à 6, comprenant les étapes consistant à :

   former une couche de la composition durcissable sur le verre trempé ou empiler une couche de composition durcissable d'un film de transfert comprenant la composition durcissable et une couche de support provisoire sur le verre pour former une couche de la composition durcissable ;
   durcir la composition durcissable pour former une couche durcie ; et
   former une couche conductrice transparente sur la couche durcie.

10. Procédé de fabrication d'un panneau avant de dispositif d'affichage d'image selon la revendication 9, dans lequel l'étape de durcissement est une étape de chauffage de la composition durcissable à une température supérieure ou égale à 200 °C sur le verre.

11. Procédé de fabrication d'un panneau avant de dispositif d'affichage d'image selon la revendication 9 ou 10, comprenant en outre une étape de formation d'un motif d'électrode transparent en fournissant une réserve de gravure sur la couche conductrice transparente et ensuite de gravure de la couche conductrice transparente dans une zone où aucune réserve de gravure n'est fournie,
dans lequel la réserve de gravure contient au moins un matériau choisi parmi le monométhyl éther acétate de propylène glycol, le monométhyl éther de propylène glycol et l'éthoxy propionate d'éthyle.

FIG. 1

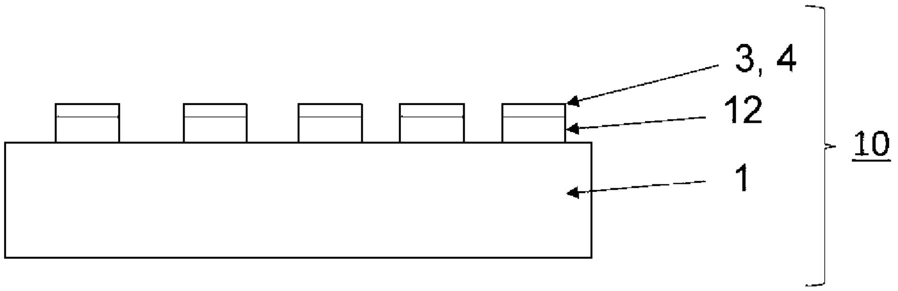

FIG. 2

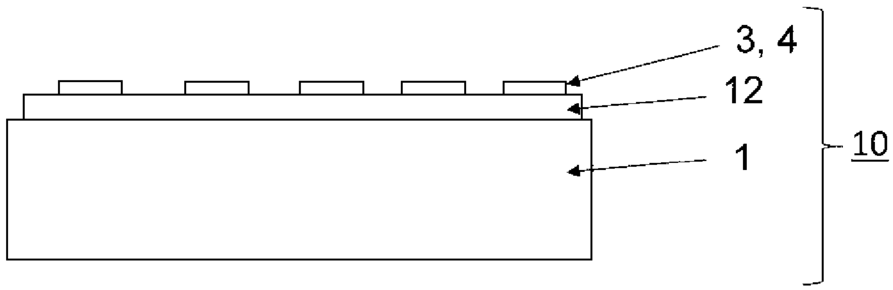

FIG. 3

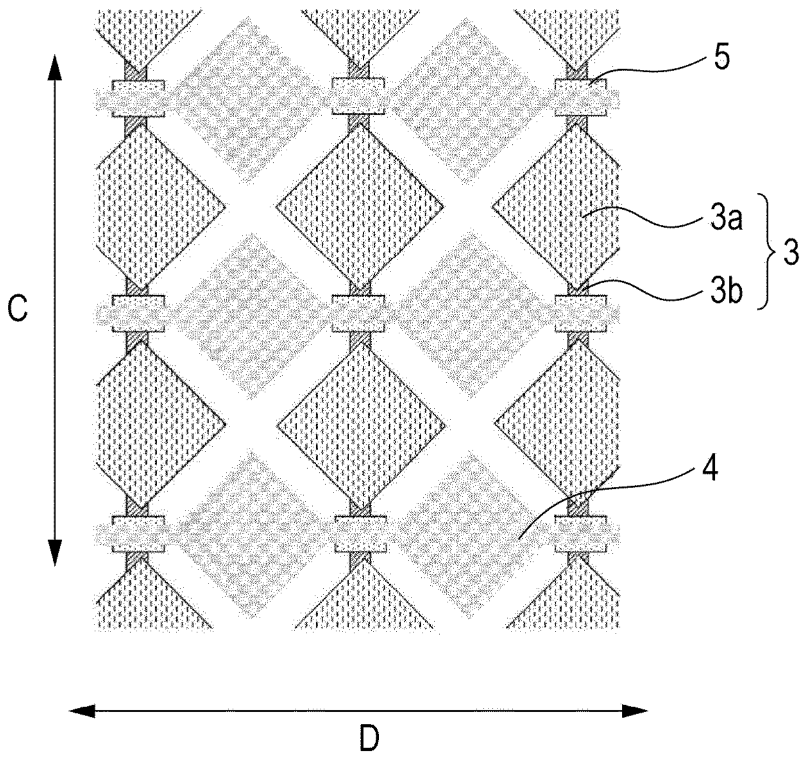

FIG. 4

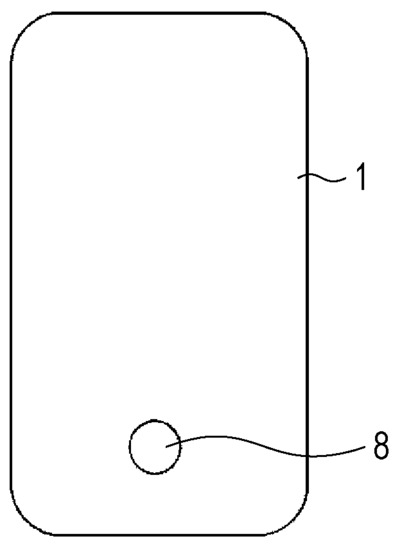

FIG. 5

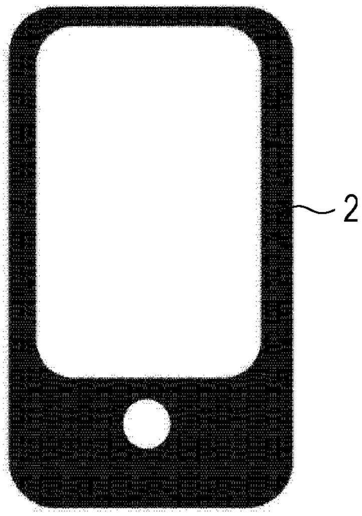

FIG. 6

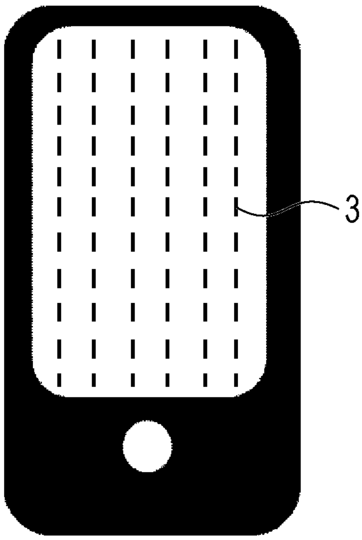

FIG. 7

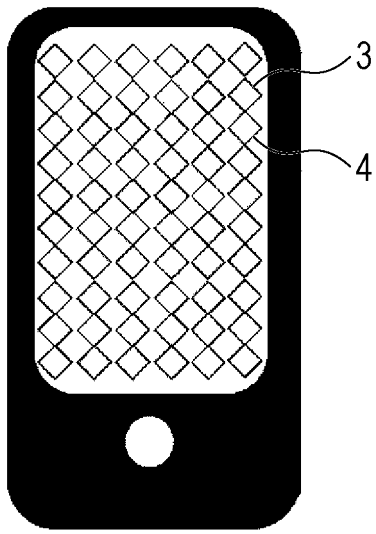

FIG. 8

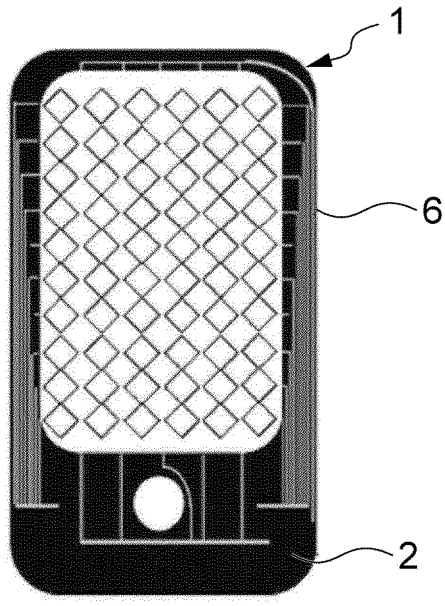

FIG. 9

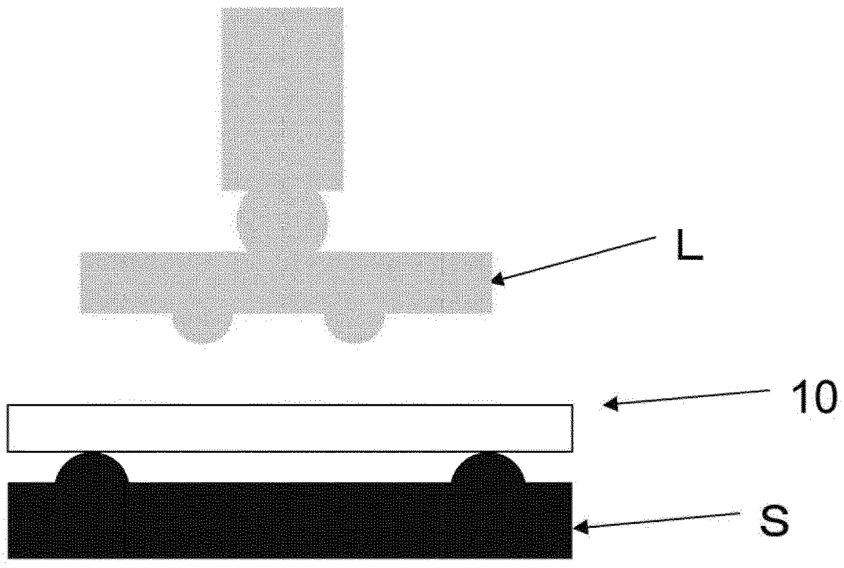

FIG. 10

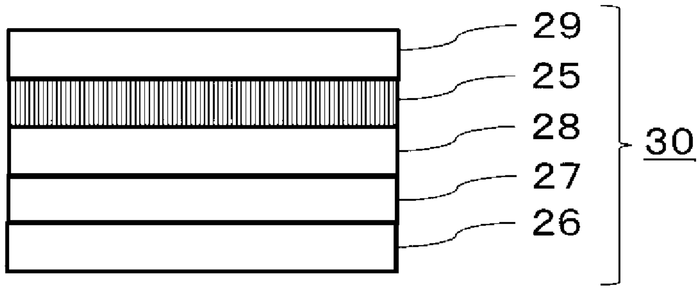

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 20080792751 A
- WO 2014030599 A
- JP 2014160460 A
- JP 2011221368 A
- JP 4098550 B
- JP 2012238636 A
- JP 2011095716 A
- JP 2013097362 A
- JP 4502784 B
- JP 2009237362 A
- JP 2000310706 A
- JP 2010237589 A
- JP 2005221726 A
- JP 5072724 A
- JP 2007225939 A
- JP 2006259138 A
- JP 4506785 B
- JP 2010152155 A
- JP 2010181729 A
- JP 5020580 B
- JP 2014178922 A
- JP 2009047936 A


### Non-patent literature cited in the description


- Saishin Tacchi Paneru Gijutu (Latest Touch Panel Technology). Techno-Times, Co., Ltd, 06 July 2009
- **YUJI MITANI.** Tacchi Paneru No Gijutu To Kaihatu (Touch Panel Technology and Development). CMC Publishing Co., Ltd, December 2004